# EUROPEAN PATENT APPLICATION

(11) **EP 4 358 616 A1**
(43) Date of publication of application: **24.04.2024**
(21) Application number: 22824568.4
(22) Date of filing: 15.03.2022
(51) Int. Cl.: H04W 72/04, H04W 72/12, H04W 92/18, H04W 84/12

(54) **ACCESS POINT, TERMINAL, AND COMMUNICATION METHOD**

(30) Priority: 16.06.2021 JP 2021100141
(71) Applicant: Panasonic Intellectual Property Corporation of America, Torrance, CA 90504 (US)
(72) Inventor: IWAI, Takashi, Kadoma-shi, Osaka 571-0057 (JP); TAKATA, Tomofumi, Kadoma-shi, Osaka 571-0057 (JP); URABE, Yoshio, Kadoma-shi, Osaka 571-0057 (JP); NAKANO, Takayuki, Kadoma-shi, Osaka 571-0057 (JP)
(74) Representative: Grünecker Patent- und Rechtsanwälte PartG mbB
(86) International application number: PCT/JP2022/011569
(87) International publication number: WO 2022/264571

(57) **Abstract**

This access point comprises: a control circuit that generates a control signal for allocating at least a portion of time of an acquired transmission opportunity to uplink transmissions of a plurality of terminals; and a transmission circuit that transmits the control signal.

## Description

### Technical Field

The present disclosure relates to an access point, a terminal, and a communication method.

### Background Art

In the Institute of Electrical and Electronics Engineers (IEEE), studies have been carried out on the IEEE 802.11be standard (hereinafter also referred to as "11be") for the next generation radio local area network (LAN), which is the successor to the IEEE 802.11ax standard (hereinafter also referred to as "11ax"). For example, IEEE 802.11ax is also referred to as High Efficiency (HE), and IEEE 802.11be is also referred to as Extreme High Throughput (EHT).

### Citation List

### Non Patent Literature

NPL 1
   IEEE 802.11-21/0268r8, PDT: Channel access for Triggered TXOP Sharing
NPL 2
   IEEE 802.11-20/1312r8, AP assisted SU PPDU Tx for 11be R1
NPL 3
   IEEE 802.11-21/0485r3, EHT TF Clarifications
NPL 4
   IEEE 802.11-20/0967r0, Multi-user Triggered P2P Transmission
NPL 5
   IEEE 802.11-19/1582r2, Coordinated AP Time/Frequency Sharing in a Transmit Opportunity in 11be

### Summary of Invention

There is scope for further study, however, on a method of allocating a transmission opportunity in radio communication such as wireless LAN.

One non-limiting and exemplary embodiment of the present disclosure facilitates providing an access point, a terminal, and a communication method each capable of improving the allocation efficiency of a transmission opportunity in radio communication.

An access point according to an embodiment of the present disclosure includes: control circuitry, which, in operation, generates a control signal of an uplink transmission, the control signal including information on allocation, for a plurality of terminals different from the access point, at least a portion of a transmission opportunity of the access point; and transmission circuitry, which, in operation, transmits the control signal.

It should be noted that general or specific embodiments may be implemented as a system, an apparatus, a method, an integrated circuit, a computer program, a storage medium, or any selective combination thereof.

According to an exemplary embodiment of the present disclosure, it is possible to improve the allocation efficiency of a transmission opportunity in radio communication.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### Brief Description of Drawings

FIG. 1 illustrates an exemplary Trigger frame;
FIG. 2 illustrates an exemplary Common Info field;
FIG. 3 illustrates an exemplary User Info field;
FIG. 4 illustrates an exemplary Special User Info field;
FIG. 5 illustrates exemplary TXOP Sharing modes;
FIG. 6 is a sequence diagram illustrating an exemplary operation of TXOP Sharing mode 1;
FIG. 7 is a sequence diagram illustrating another exemplary operation of TXOP Sharing mode 1;
FIG. 8 is a sequence diagram illustrating an exemplary operation of TXOP Sharing for multiple stations (STAs) by Frequency Division Multiplexing (FDM);
FIG. 9 is a sequence diagram illustrating another exemplary operation of the TXOP Sharing for multiple stations (STAs) by the Frequency Division Multiplexing (FDM);
FIG. 10 is a block diagram illustrating an exemplary configuration of part of an access point (AP);
FIG. 11 is a block diagram illustrating an exemplary configuration of part of a STA;
FIG. 12 is a block diagram illustrating an exemplary configuration of the AP;
FIG. 13 illustrates exemplary TXOP Sharing modes according to Embodiment 1;
FIG. 14 is a block diagram illustrating an exemplary configuration of a STA terminal;
FIG. 15 illustrates an exemplary User Info field according to Embodiment 1;
FIG. 16 illustrates an exemplary indication method of a frequency resource;
FIG. 17 illustrates another exemplary indication method of a frequency resource;
FIG. 18 illustrates yet another exemplary indication method of a frequency resource;
FIG. 19 is a sequence diagram illustrating an exemplary operation of TXOP Sharing for multiple STAs by FDM according to Embodiment 1;
FIG. 20 is a sequence diagram illustrating another exemplary operation of the TXOP Sharing for multiple STAs by FDM according to Embodiment 1;
FIG. 21 is a sequence diagram illustrating an exemplary operation of TXOP Sharing for multiple STAs by Time Division Multiplexing (TDM);
FIG. 22 is a sequence diagram illustrating an exemplary operation of TXOP Sharing for multiple STAs by TDM according to Embodiment 2;
FIG. 23 is a sequence diagram illustrating another exemplary operation of the TXOP Sharing for multiple STAs by TDM according to Embodiment 2;
FIG. 24 illustrates an exemplary User Info field according to Embodiment 2;
FIG. 25 is a sequence diagram illustrating yet another exemplary operation of the TXOP Sharing for multiple STAs by TDM according to Embodiment 2;
FIG. 26 illustrates another exemplary Common Info field; and
FIG. 27 illustrates an exemplary TXOP Sharing mode for multi-user.

### Description of Embodiments

Hereinafter, embodiments of the present disclosure will be described in detail with reference to the accompanying drawings.

In 11be, as in 11ax, a prioritized control scheme called Enhanced Distributed Channel Access (EDCA) may be used for priority setting of individual transmission opportunities for access categories (ACs). In the EDCA, for example, an AC that has once obtained the transmission right enables a successive transmission of a radio signal at the minimum wait time (Short Inter Frame Space (SIFS)) interval. The time during which this successive transmission is enabled may be referred to as a "Transmission Opportunity (TXOP)." The upper limit time of the TXOP may be individually specified for an AC, for example.

In 11be, for example, "TXOP sharing" has been discussed by which an access point (AP; or also referred to as a "base station") assigns a portion of an obtained TXOP to a terminal (STA; Station, or also referred to as a "non-AP STA"). By way of example, a procedure in which an AP triggers the TXOP sharing for one STA (e.g., "Triggered TXOP sharing procedure") has been studied (e.g., see Non-Patent Literatures (hereinafter each referred to as "NPL") 1 to 5).

In 11ax, for example, a mechanism (e.g., referred to as a "Triggered UL operation") has been introduced in which an AP schedules a radio resource of an uplink signal of a STA by using a control signal (hereinafter referred to as a "Trigger frame") indicating transmission of the uplink signal. The Triggered UL operation can improve the efficiency of orthogonal multiplexing for the uplink signal of the STA and also improve the throughput performance.

Here, for example, in the Triggered UL operation, an AP dynamically grasps a STA condition such as the transmission buffer status (e.g., Buffer Status Report (BSR)) or the communication quality of each STA and then calculates, based on the STA condition, a plurality of radio parameters to be applied to the uplink signal (e.g., uplink response signal for Trigger frame) of each STA. Examples of the radio parameters include a signal length, a Modulation and Coding Scheme (MCS), the number of spatial streams, and a transmission power, which are for an uplink signal. Thus, the Triggered UL operation may complicate the processing (e.g., calculation) in scheduling by an AP.

Incidentally, an uplink response signal is sometimes referred to as, for example, a trigger-based physical layer protocol data unit (TB PPDU).

Meanwhile, in the TXOP sharing, for example, when an AP assigns a portion of an obtained TXOP to a certain STA, a transmission prohibition period (Network Allocation Vector (NAV)) may be configured for a STA different from the STA to which the portion of the TXOP has been assigned. Configuring the NAV can suppress a collision of a transmission signal of the STAto which the portion of the TXOP has been assigned. Further, the STAto which the TXOP sharing is applied can improve the signal transmission efficiency by determining, based on the transmission buffer status or communication quality of this STA, the radio parameters to be applied to the transmission signal of this STA. In other words, in the TXOP sharing, an AP need not perform at least part of the scheduling for an uplink signal transmitted by a STA, thus simplifying the processing in the AP, as compared with the Triggered UL operation.

Thus, in 11be, for example, supporting the TXOP sharing in addition to the Triggered UL operation makes it possible to suppress the collision of an uplink signal of a STA and improve the throughput performance with the simple processing in an AP.

In 11be, for example, it has been studied that an AP instruct one STA on the TXOP sharing by using, as a type of Trigger frame (e.g., referred to as a "Trigger Type"), a Trigger frame configured with Multi-User Request-To-Send (MU-RTS) (hereinafter referred to as a "MU-RTS Trigger frame") (see, e.g., NPL 1).

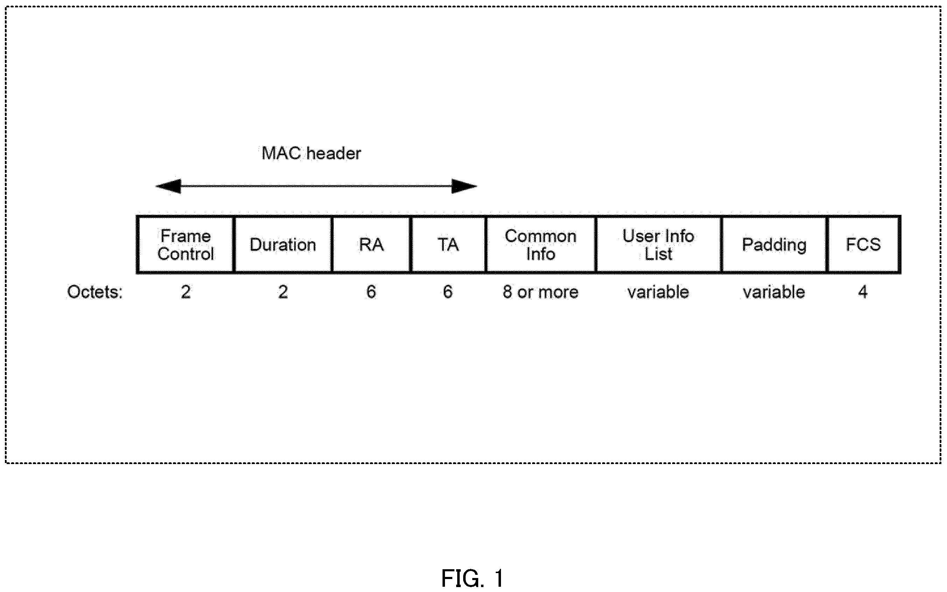

FIG. 1 illustrates an exemplary Trigger frame. As illustrated in FIG. 1, the Trigger frame includes, for a plurality of STAs to be frequency multiplexed, a field including information common to the plurality of STAs (hereinafter may also be referred to as "STA-common information") (e.g., "common information field (Common Info field")) and a field referred to as a User Info List. The User Info List may include, for example, one or more fields including individual (or specific) information for the STAs (hereinafter may also be referred to as "STA-specific information") (e.g., "user information field (User Info field")).

Meanwhile, in 11be, for example, a Trigger frame may include a field including information for a STA that supports 11be (EHT) (e.g., "Special User Info field") (not illustrated).

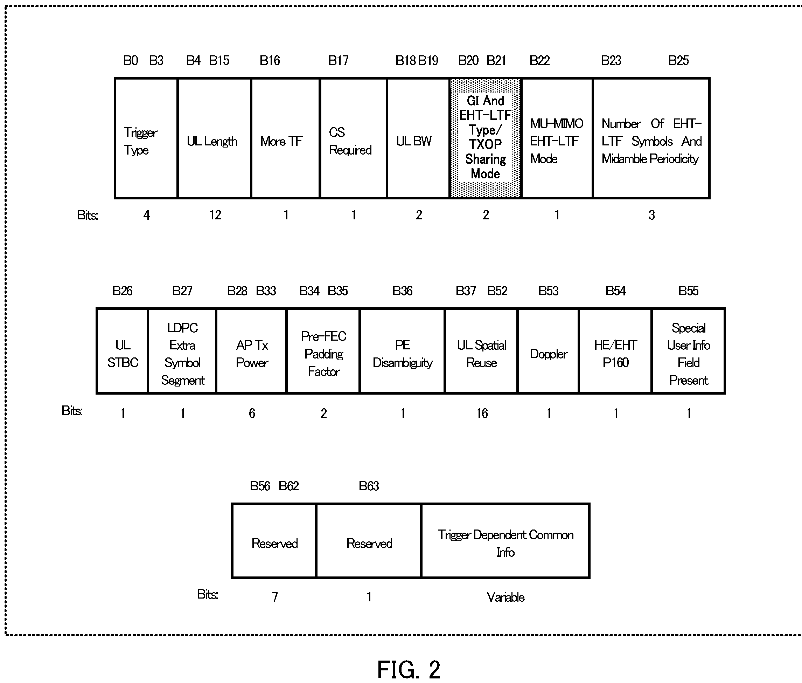

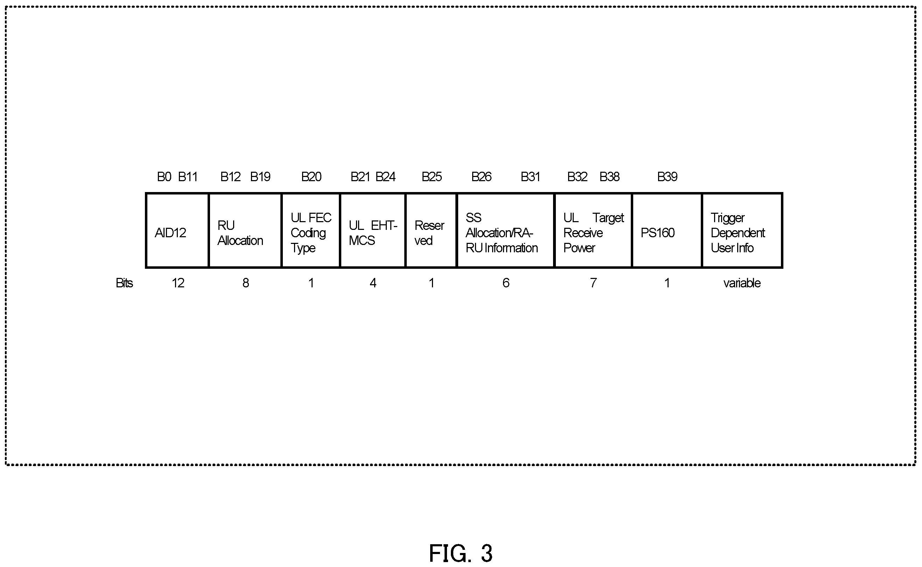

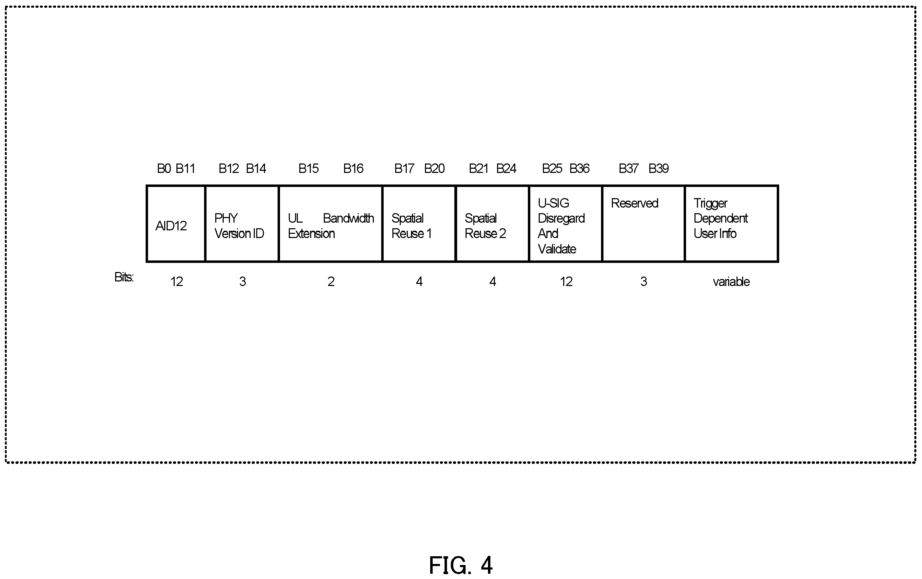

FIG. 2 illustrates an exemplary configuration of a Common Info field (e.g., EHT variant of the Common Info field format) to be studied in 11be (e.g., EHT). Further, FIG. 3 illustrates an exemplary configuration of a User Info field (e.g., EHT variant of the User Info field format) to be studied in 11be (EHT) (e.g., see NPL 1). Further, FIG. 4 illustrates an exemplary configuration of a Special User Info field (e.g., see NPL 3).

For example, a Trigger Type subfield of the Common Info field illustrated in FIG. 2 is a subfield that indicates a type of Trigger frame (e.g., type of signal transmitted from STA caused by AP). For example, by configuring the Trigger Type to a value indicating MU-RTS (e.g., in the case of 11be, Trigger Type subfield value = 3), an AP can indicate on an MU-RTS Trigger frame to a predetermined STA. When a STA receives an MU-RTS Trigger frame with an Association ID (AID) of the STA specified in a User Info field included in the received MU-RTS Trigger frame, for example, the STA may transmit a Clear To Send (CTS) frame to the AP.

In 11be, in the case of MU-RTS Trigger frame, for example, the area of B20 to B21 in the Common Info field illustrated in FIG. 2 is recognized as a "TXOP Sharing Mode" subfield for the TXOP sharing configuration.

Meanwhile, when a type of Trigger frame is different from the MU-RTS Trigger frame, the area of B20 to 21 in the Common Info field may be recognized as a "GI And EHT-LTF Type" subfield. The GI And EHT-LTF Type subfield may include, for example, parameter information on an EHT-Long Training Field (LTF). For example, the information included in the GI And EHT-LTF Type subfield is information that is not used for transmission of a CTS frame including no EHT-LTF.

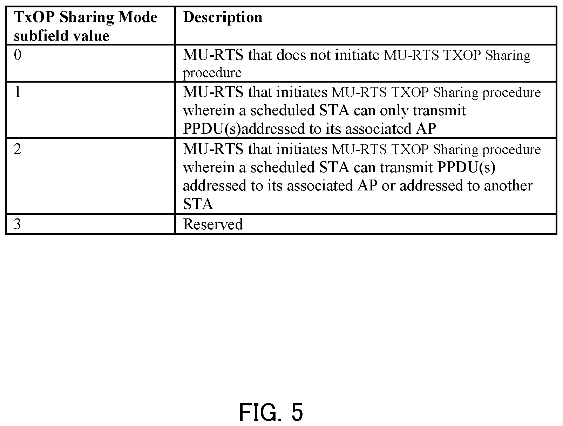

FIG. 5 illustrates exemplary TXOP Sharing Modes to be studied in 11be (see, e.g., NPL 1).

In FIG. 5, when the TxOP Sharing Mode is 0 (TxOP Sharing Mode subfield value = 0), the TXOP sharing (e.g., MU-RTS TXOP Sharing) is not performed, and a STA transmits a CTS frame to an AP, for example.

Further, in FIG. 5, when the TxOP Sharing Mode is 1 or 2 (TxOP Sharing Mode subfield value = 1 or 2), the TXOP sharing (e.g., MU-RTS TXOP Sharing) may be performed.

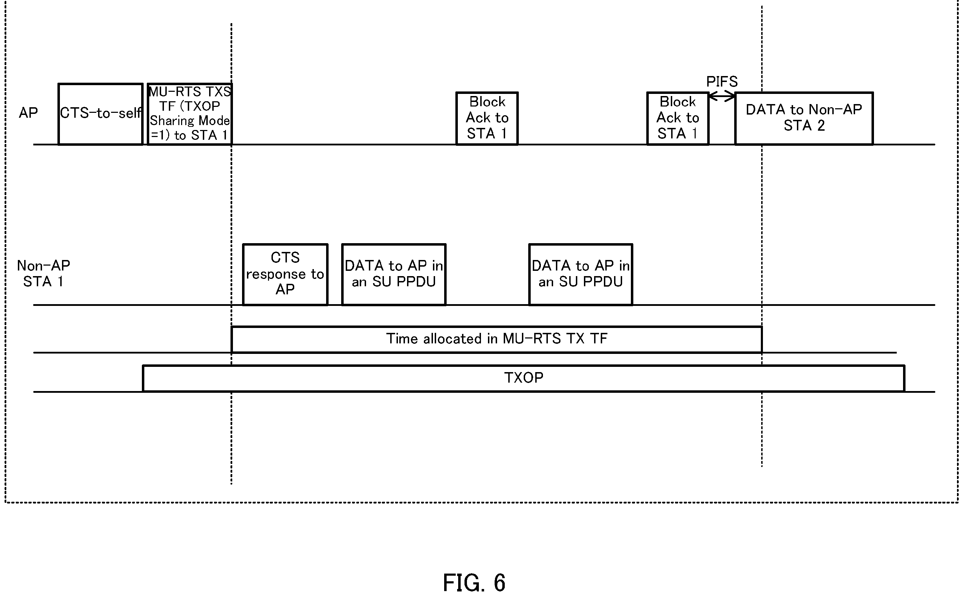

For example, when the TxOP Sharing Mode is 1, in an allocated period corresponding to a portion of the TXOP (Time allocated in MU-RTS TX TF), a STA to be scheduled (e.g., referred to as Non-AP STA 1 or STA 1) is allowed to transmit a radio frame (e.g., Single User (SU) PPDU) to a connected AP (e.g., associated AP), as illustrated in FIG. 6. In other words, when the TxOP Sharing Mode is 1, STA 1 transmits no radio frame to an AP or STA different from the connected AP.

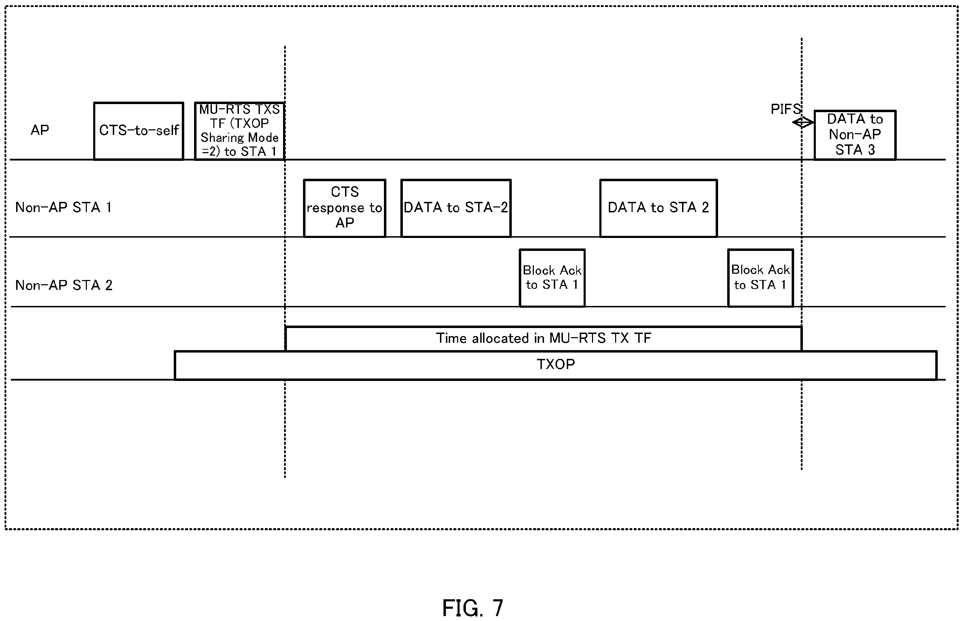

Further, for example, when the TxOP Sharing Mode is 2, in an allocated period corresponding to a portion of the TXOP (Time allocated in MU-RTS TX TF), a STA to be scheduled (e.g., STA 1) is allowed to transmit a radio frame to a connected AP or another STA (e.g., STA2), as illustrated in FIG. 7.

When the above-mentioned TxOP Sharing Mode is equal to or greater than 1 (or non-zero), i.e., an MU-RTS Trigger frame to which the TXOP sharing is applied is sometimes referred to as an "MU-RTS TXS (TXOP) Trigger frame (MU-RTS TXS TF)."

Here, as illustrated in FIGS. 6 and 7, when an AP receives, from a scheduled STA, the CTS frame (e.g., CTS response) in response to the MU-RTS TXS Trigger frame, the AP may determine that the TXOP sharing has been appropriately indicated to the STA. In this case, the AP need not transmit a signal other than an ACK response (e.g., Block Ack) that is required from the scheduled STA in the allocated period. Incidentally, for example, as illustrated in FIGS. 6 and 7, in the allocated period, when a carrier sense is IDLE in Point Coordination Function (PCF) Interframe Space (PIFS), the AP may retrieve the TXOP from the STA and may transmit a signal to another STA.

For example, in 11be, the number of STAs to which an instruction can be made by using an MU-RTS Trigger frame is one, and thus, in the MU-RTS Trigger frame, a single User Info field illustrated in FIG. 3 is configured (e.g., see NPL 1). Further, in an allocated period for a STA in the TXOP Sharing, the STA may determine parameters such as the MCS of a transmission signal and the like in this STA and transmit an SU PPDU of a specified band (e.g., 20 MHz × N (N is integer) band). Besides, for an instruction on the allocated period for the STA, the use of a subfield of the Common Info field (e.g., UL Length subfield) has been discussed, for example.

Here, for example, how an AP instructs a plurality of STAs on the TXOP sharing (e.g., Trigger frame format or procedure) has not been fully studied.

In a non-limiting and exemplary embodiment of the present disclosure, a description will be given of an exemplary method by which an AP instructs a plurality of STAs on the TXOP sharing.

### (Embodiment 1)

In the present embodiment, a case of performing the TXOP sharing for multiple STAs by Frequency Division Multiplexing (FDM) will be described.

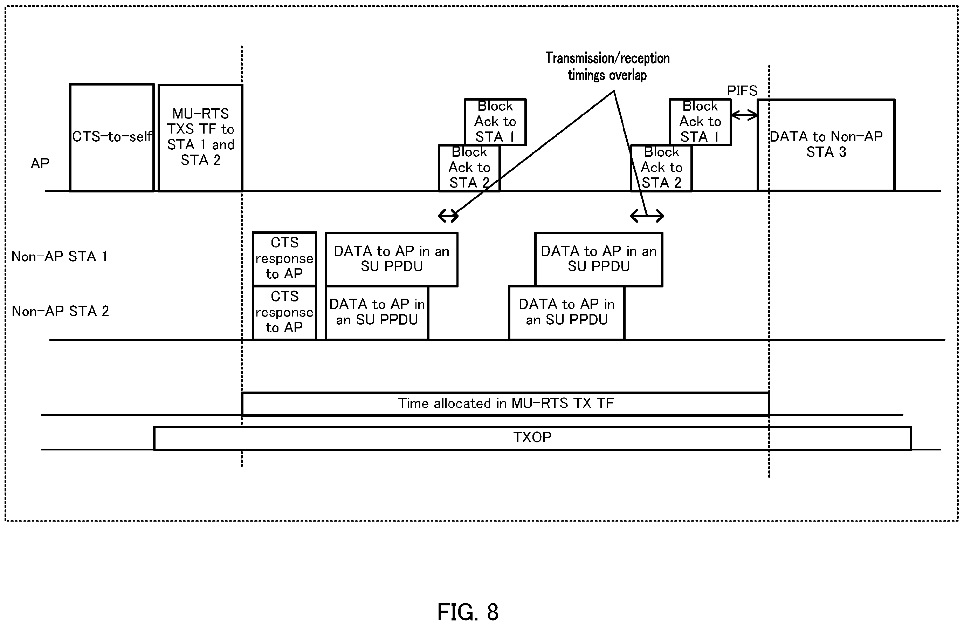

FIG. 8 illustrates an exemplary sequence in which, when the TxOP Sharing Mode = 1 (e.g., when scheduled STA communicates with associated AP), an AP performs the TXOP sharing for STA 1 and STA 2 by FDM.

In FIG. 8, the AP may allocate orthogonal frequency resources (20 MHz channel × N (channels in 20-MHz unit)) to STA 1 and STA 2, respectively, using an MU-RTS TXS Trigger frame, for example.

Here, STA 1 and STA 2 may each determine a time length of an SU PPDU. Therefore, as illustrated in FIG. 8, since time lengths of SU PPDUs may be different between STA 1 and STA 2, timings of transmission and reception in the AP (e.g., ACK transmission to STA 2 and PPDU reception from STA 1) may overlap with each other. For example, when a transmission timing and a reception timing overlap with each other, an AP not supporting full-duplex communication may not perform the processing on either a transmission signal or a received signal. Further, even when the AP supports the full-duplex communication, for example, self-interference (i.e., case where received signal includes adjacent-channel interference of transmission signal) occurs, which may deteriorate the reception performance.

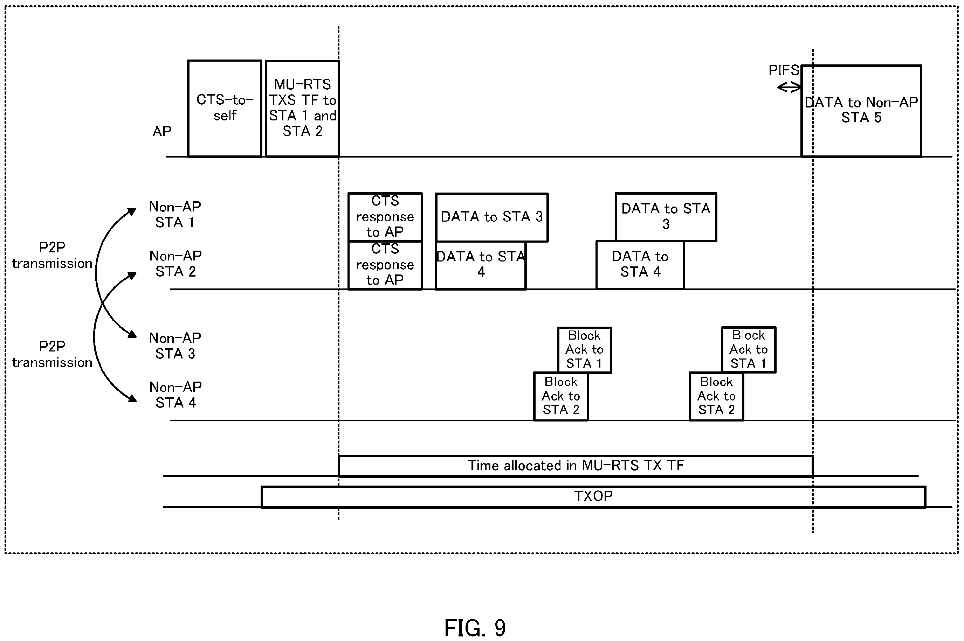

FIG. 9 illustrates an exemplary sequence in which, when the TxOP Sharing Mode = 2 (e.g., case of inter-STA communication where scheduled STA communicates with another STA), an AP performs the TXOP sharing for STA 1 and STA 2 by FDM.

Note that the inter-STA communication is also referred to as peer to peer (P2P) or Direct Link (DiL).

In FIG. 9, as in FIG. 8, the AP may allocate orthogonal frequency resources (e.g., 20 MHz channel × N) to STA 1 and STA 2, respectively, using an MU-RTS TXS Trigger frame, for example. Here, since P2P communication by STA 1 with STA 3 and P2P communication by STA 2 with STA 4 are performed in a band subjected to FDM, the overlap of transmission and reception timings in the AP as described in FIG. 8 does not occur even when time lengths of SU PPDUs are different between STA 1 and STA 2

In the present embodiment, for example, a method of inhibiting the overlap of transmission and reception timings in an AP and performing the TXOP sharing for multiple STAs by FDM will be described.

### [Configuration of Radio Communication System]

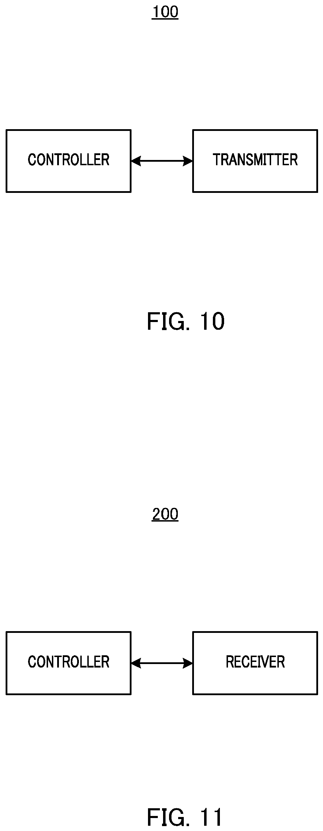

A radio communication system according to the present embodiment may include, for example, AP 100 illustrated in FIG. 10 and STA 200 illustrated in FIG. 11. At least one of AP 100 and STA 200 in number of two or more may be present in the radio communication system. For example, AP 100 may transmit, to STA 200, a Trigger frame (e.g., MU-RTS TXS Trigger frame) indicating the TXOP Sharing. STA200 may receive the MU-RTS TXS Trigger frame and transmit a signal to AP 100 or another STA, based on a resource (e.g., allocated period) indicated in the received MU-RTS TXS Trigger frame.

FIG. 10 is a block diagram illustrating an exemplary configuration of part of AP 100 according to an exemplary embodiment of the present disclosure. In AP 100 illustrated in FIG. 10, a controller (e.g., corresponding to control circuitry) generates a control signal (e.g., Trigger frame) for allocating, for an uplink transmission performed by a plurality of STAs 200, at least some time (e.g., allocated period) of an obtained transmission opportunity (e.g., TXOP). A transmitter (e.g., corresponding to transmitting circuitry) transmits the control signal.

FIG. 11 is a block diagram illustrating an exemplary configuration of part of STA 200 according to an exemplary embodiment of the present disclosure. In STA 200 illustrated in FIG. 11, receiver (e.g., corresponding to reception circuitry) receives a control signal (e.g., Trigger frame) for allocating, for an uplink transmission performed by a plurality of STAs 200, at least some time of a transmission opportunity (e.g., TXOP) obtained by AP 100. Further, a controller (e.g., corresponding to control circuitry) controls the uplink transmission in the at least some time of the transmission opportunity, based on the control signal.

### [Exemplary Configuration of AP 100]

AP 100 generates a Trigger frame (e.g., MU-RTS TXS Trigger frame) instructing multiple STAs on the TXOP Sharing and then transmits the MU-RTS TXS Trigger frame to STA 200, for example.

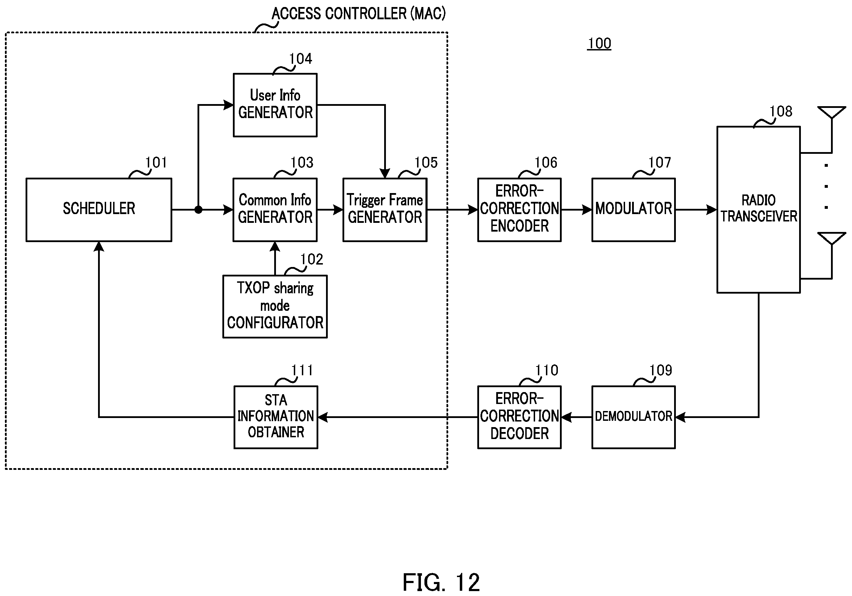

FIG. 12 is a block diagram illustrating an exemplary configuration of AP 100. AP 100 illustrated in FIG. 12 may include, for example, scheduler 101, TXOP sharing mode configurator 102, Common Info generator 103, User Info generator 104, Trigger frame generator 105, error-correction encoder 106, modulator 107, radio transceiver 108, demodulator 109, error-correction decoder 110, and STA information obtainer 111.

For example, scheduler 101, TXOP sharing mode configurator 102, Common Info generator 103, User Info generator 104, Trigger frame generator 105, and STA information obtainer 111 may be included in an access controller (e.g., Medium Access Control (MAC) processor).

Further, at least one of scheduler 101, TXOP sharing mode configurator 102, Common Info generator 103, User Info generator 104, Trigger frame generator 105, error-correction encoder 106, modulator 107, demodulator 109, error-correction decoder 110, and STA information obtainer 111 illustrated in FIG. 12 may be included in the controller illustrated in FIG. 10, for example. Meanwhile, radio transceiver 108 illustrated in FIG. 12 may be included in the transmitter illustrated in FIG. 10, for example.

Scheduler 101 may, for example, perform scheduling for STA 200. By way of example, scheduler 101 may determine, based on STA information inputted from STA information obtainer 111, a TXOP Sharing mode and an allocated radio resource (including, e.g., at least one of allocated period and band in TXOP sharing) which are to be applied to STA 200.

For example, the TXOP Sharing mode may include a TXOP Sharing mode for multiple STAs, in addition to the above-described TXOP Sharing mode for one STA. When the TXOP Sharing mode for multiple STAs is applied, scheduler 101 may, for example, determine whether the communication in the allocated period for the plurality of STAs 200 to which the TXOP sharing is applied is communication addressed to AP 100 (e.g., communication between AP 100 and STA 200) or communication addressed to another STA (e.g., P2P communication (inter-terminal communication)).

Further, a plurality of TXOP sharing modes for multiple STAs may be defined. For example, in an allocated period to which the TXOP sharing is applied, a mode for frequency division multiplexing (FDM) of signals of multiple STAs and a mode for time division multiplexing (TDM) of the signals of the multiple STAs may be defined. The multiplexing methods of signals of multiple STAs are not limited to FDM and TDM and may be other multiplexing methods.

Besides, the allocated radio resource may include, for example, a period (e.g., time resource) of a portion of the TXOP obtained by AP 100. In addition, for example, when the TXOP sharing for multiple STAs is applied by FDM, the allocated radio resource may include channels (e.g., bands in 20-MHz unit) to be assigned to STAs 200.

Further, the STA information may include, for example, control information on Capability information of STA 200, a transmission buffer status, and P2P configuration.

The Capability information may include, for example, information indicating whether STA 200 can perform transmission and reception in a channel different from a Primary channel.

The transmission buffer status may include information on the AC and size of transmission buffer addressed to AP 100 in STA 200, for example. Additionally, the transmission buffer status may include, for example, information on the AC and size of transmission buffer addressed to another STA (also called "Direct Link Peer (DLP) STA") that is connected to STA 200 in P2P link (or called Direct Link).

Further, the P2P configuration information may include, for example, a STAID (ID specific to STA) of a STA that performs the P2P communication with STA 200.

Scheduler 101, for example, outputs the determined TXOP sharing mode and allocated radio resource for each STA 200 to Common Info generator 103 and User Info generator 104.

TXOP sharing mode configurator 102 may, for example, configure an association between a TXOP sharing mode and information indicating a TXOP sharing mode in a Trigger frame (e.g., TXOP sharing mode value) and hold information on the configured TXOP sharing mode. TXOP sharing mode configurator 102 may output the held information on the TXOP sharing mode to Common Info generator 103.

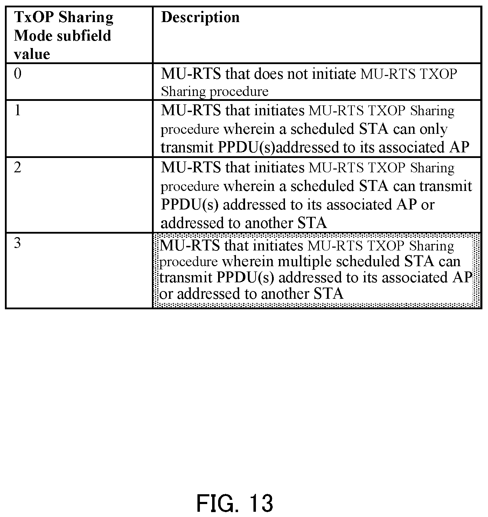

The association between the TXOP sharing mode and the information indicating the TXOP sharing mode in the Trigger frame may be, for example, information in a table format (e.g., referred to as a "TXOP sharing mode table") or information in a format different from the table format. FIG. 13 illustrates an exemplary TXOP sharing mode table that is held by TXOP sharing mode configurator 102. The TXOP sharing mode table illustrated in FIG. 13 may include, for example, a TXOP sharing mode described in NPL 1 and illustrated in FIG. 5 (e.g., TXOP sharing mode = any of 0 to 2) and a TXOP sharing mode for a plurality of STAs 200 (e.g., TXOP sharing mode = 3).

Common Info generator 103 may, for example, generate control information to be included in a Common Info field that is common to a plurality of STAs 200. Common Info generator 103 may, for example, generate information on a TXOP sharing mode subfield, based on the "type of TXOP sharing mode" included in the information on the TXOP sharing mode inputted from scheduler 101 and the information on the TXOP sharing mode inputted from TXOP sharing mode configurator 102 (e.g., TXOP sharing mode table).

Moreover, Common Info generator 103 may, for example, generate information on an allocated period for STA 200, based on the information on the allocated radio resource inputted from scheduler 101.

In one example, when the TXOP sharing is performed, Common Info generator 103 may generate an MU-RTS TXS Trigger frame by configuring a Trigger type subfield with MU-RTS and configuring the TXOP sharing mode subfield with a predetermined value (e.g., for TXOP sharing mode table of FIG. 13, any value equal to or greater than one).

Common Info generator 103 may output the generated information on the Common Info field to Trigger frame generator 105.

The term "configuration" for a field (e.g., subfield) in a Trigger frame may be replaced with other terms such as "definition" and "interpretation," for example.

User Info generator 104 may, for example, generate control information included in a Special User Info field or an individual User Info field for STA 200. User Info generator 104 may, for example, generate the information on the Special User Info field or the individual User Info field for STA 200, based on the specified format, and then generate information on a User Info List that includes the User Info field for each of a plurality of STAs 200. User Info generator 104 may, for example, output the information on the User Info List to Trigger frame generator 105.

The individual User Info field for STA200 may include, for example, "information indicating whether the communication in the allocated period is the communication addressed to AP 100 or the communication addressed to another STA (e.g., referred to as "communication-type information")" and "information on the assigned channel (band in 20-MHz unit)," which are included in the information on the TXOP sharing mode inputted from scheduler 101. Incidentally, the communication-type information may be indicated to STA 200 when the TXOP sharing mode for multiple STAs is applied, for example. In other words, when the TXOP Sharing mode for one STA is applied, the communication-type information need not be indicated to STA 200.

Further, the number of User Info fields included in the User Info List may be associated with the TXOP sharing mode indicated in the TXOP sharing mode subfield, for example. By way of example, when the TXOP sharing mode is a mode for applying the TXOP sharing for one STA (e.g., when TXOP sharing mode = 1 or 2 is indicated in TXOP sharing mode table illustrated in FIG. 13), the User Info List may include a single User Info field. On the other hand, when the TXOP sharing mode is a mode for applying the TXOP sharing for multiple STAs (e.g., when TXOP sharing mode = 3 is indicated in TXOP sharing mode table illustrated in FIG. 13), the User Info List may include a plurality of User Info fields.

Note that the Special User Info field may include control information for one STA 200 without depending on a TXOP sharing mode.

Trigger frame generator 105, for example, may generate, based on the format illustrated in FIG. 1, a Trigger frame including the information on the Common Info field inputted from Common Info generator 103 and the information on the User Info List (e.g., Special User Info field and at least one User Info field) inputted from User Info generator 104. The Trigger frame may include, for example, at least one of a MAC header, Padding, and a frame check sequence (FCS), in addition to the Common Info field and the User Info List. Trigger frame generator 105 may, for example, output the generated Trigger frame to error-correction encoder 106.

Error-correction encoder 106, for example, performs error correction encoding on a transmission data signal including the Trigger frame inputted from Trigger frame generator 105 and outputs the encoded signal to modulator 107.

Modulator 107, for example, performs modulation processing on the signal inputted from error-correction encoder 106 and outputs the modulated signal to radio transceiver 108.

Incidentally, in a case where the modulated data signal is an orthogonal frequency division multiplexing (OFDM) signal, AP 100 (e.g., modulator 107) may form the OFDM signal by mapping the modulated signal to a specified frequency resource, performing Inverse Fast Fourier transform (IFFT) processing in order to transform the modulated signal into a time waveform, and adding a cyclic prefix (CP).

Radio transceiver 108, for example, performs radio transmission processing such as D/A conversion and/or up-conversion to a carrier frequency on the modulated signal inputted from modulator 107, and transmits the signal resulting from the radio transmission processing to STA 200 via an antenna. Additionally, radio transceiver 108, for example, receives, via an antenna, a signal transmitted from STA 200 and performs, on the received signal, radio reception processing such as down-conversion to baseband and/or A/D conversion, and outputs the signal resulting from the radio reception processing to demodulator 109.

Demodulator 109, for example, performs demodulation processing on the signal inputted from radio transceiver 108 and outputs the demodulated signal to error-correction decoder 110. Incidentally, when the signal inputted to demodulator 109 is an OFDM signal, AP 100 (e.g., demodulator 109) may perform CP removal processing and Fast Fourier transform (FFT) processing.

Error-correction decoder 110, for example, decodes the signal inputted from demodulator 109 and thereby obtains a received data signal from STA 200. For example, when the received data after decoding includes the above-mentioned STA information, error-correction decoder 110 outputs the decoded data including the STA information to STA information obtainer 111.

STA information obtainer 111 may, for example, obtain STA information (e.g., Capability information of STA 200, transmission buffer status, or P2P configuration information) from the decoded data inputted from error-correction decoder 110, and output the obtained STA information to scheduler 101.

### [Exemplary Configuration of STA 200]

For example, STA 200 receives, from AP 100, a Trigger frame indicating the TXOP Sharing (e.g., MU-RTS TXS Trigger frame) and transmits, to AP 100, an uplink response signal (e.g., CTS frame) for the Trigger frame or an SU PPDU including transmission data. STA 200 then, based on the indication in the MU-RTS TXS Trigger frame, for example, communicates with AP 100 or another STA, using an assigned channel in an allocated period.

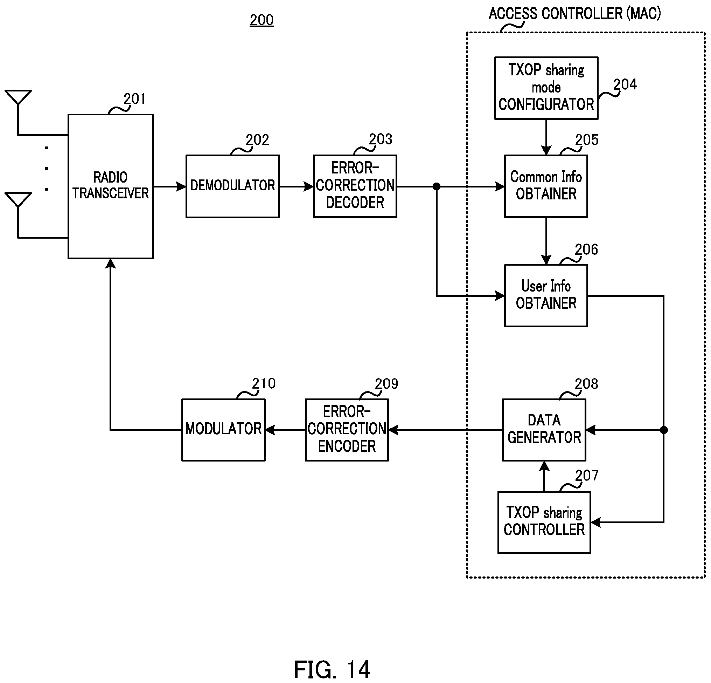

FIG. 14 is a block diagram illustrating an exemplary configuration of STA 200. STA 200 illustrated in FIG. 14 may include, for example, radio transceiver 201, demodulator 202, error-correction decoder 203, TXOP sharing mode configurator 204, Common Info obtainer 205, User Info obtainer 206, TXOP sharing controller 207, data generator 208, error-correction encoder 209, and modulator 210.

For example, at least one of TXOP sharing mode configurator 204, Common Info obtainer 205, User Info obtainer 206, TXOP sharing controller 207, and data generator 208 may be included in an access controller (e.g., MAC processor).

Further, at least one of demodulator 202, error-correction decoder 203, TXOP sharing mode configurator 204, Common Info obtainer 205, User Info obtainer 206, TXOP sharing controller 207, data generator 208, error-correction encoder 209, and modulator 210 illustrated in FIG. 14 may be included in the controller illustrated in FIG. 11, for example. Meanwhile, radio transceiver 201 illustrated in FIG. 14 may be included in the receiver illustrated in FIG. 11, for example.

Radio transceiver 201, for example, receives a received signal via an antenna and performs, on the received signal, radio reception processing such as down-conversion and/or A/D conversion and outputs the signal resulting from the radio reception processing to demodulator 202. Additionally, radio transceiver 201 performs radio transmission processing such as up-conversion and/or D/A conversion on a signal inputted from modulator 210, and transmits the signal resulting from the radio transmission processing via an antenna.

Demodulator 202, for example, performs demodulation processing on the received data inputted from radio transceiver 201, and outputs the demodulated signal to error-correction decoder 203. Incidentally, when the signal inputted to demodulator 202 is an OFDM signal, STA 200 (e.g., demodulator 202) may perform the CP removal processing and the FFT processing.

Error-correction decoder 203 may, for example, decode the demodulated signal inputted from demodulator 202 and output the decoded signal as a received data signal. Further, error-correction decoder 203, for example, outputs a Trigger frame in the received data signal to Common Info obtainer 205 and User Info obtainer 206.

TXOP sharing mode configurator 204 may, for example, perform the same operation as in TXOP sharing mode configurator 102 of AP 100. By way of example, TXOP sharing mode configurator 204 may output information on a previously defined TXOP sharing mode (e.g., TXOP sharing mode table) to Common Info obtainer 205.

When a Trigger type of the Trigger frame inputted from error-correction decoder 203 is MU-RTS, for example, Common Info obtainer 205 may extract, based on the information inputted from TXOP sharing mode configurator 204 (e.g., TXOP sharing mode table), information corresponding to a Common Info field from the Trigger frame inputted from error-correction decoder 203 and thereby obtain STA-common information on the TXOP sharing.

The STA-common information on the TXOP sharing may include, for example, information on a TXOP sharing mode and information on an allocated period for STA 200. The allocated period for STA 200 may be included in a User Info field, as a STA-specific information. Moreover, the STA-common information may include, for example, information indicating that the TXOP sharing mode is based on FDM (hereinafter may also be referred to as "FDM- basis TXOP sharing mode") and is for multiple STAs.

Common Info obtainer 205 may output the extracted STA-common information to User Info obtainer 206.

User Info obtainer 206 may, for example, extract information corresponding to a User Info List (e.g., at least one User Info field and Special User Info field) from the Trigger frame inputted from error-correction decoder 203, and perform reception processing of a User info field based on the STA-common information (e.g., including TXOP sharing mode) inputted from Common Info obtainer 205. User Info obtainer 206 may, for example, perform the reception processing of a plurality of User Info fields when the TXOP sharing mode indicates the TXOP sharing for multiple STAs. On the other hand, User Info obtainer 206 may, for example, perform the reception processing of a single User Info field when the TXOP sharing mode indicates the TXOP sharing for one STA.

By way of example, when decoding information (e.g., STA ID or AID) for identifying STA 200 included in the User Info field and determining that allocation instruction addressed to STA 200 is present, User Info obtainer 206 may obtain, from the User Info field, at least one of the STA-specific information on the TXOP sharing and the STA common information (e.g., "information on allocated period for STA," "information indicating whether communication in allocated period is communication addressed to AP or communication addressed to another STA," and "information on assigned cannel (band in 20-MHz unit))." Incidentally, the information indicating whether the communication in the allocated period is the communication addressed to an AP or the communication addressed to another STA may be included in the User Info field when the TXOP sharing mode for multiple STAs is applied, and need not be included in the User Info field when the TXOP sharing mode for one STAs is applied, for example.

User Info obtainer 206 may, for example, output the STA-specific information and the STA-common information to TXOP sharing controller 207 and data generator 208.

TXOP sharing controller 207 may determine an allocated radio resource based on the information inputted from User Info obtainer 206 (including, e.g., STA specific information and STA common information), for example. TXOP sharing controller 207 may control, based on the allocated radio resource, data transmission in a radio resource that is subjected to the TXOP sharing and instructed by AP 100, for example. Control of the data transmission may include, for example, an allocated period, an assigned channel, and control of a destination of communication in the allocated period. In one example, in the case of FDM-basis TXOP sharing mode for multiple STAs, TXOP sharing controller 207 may determine a frequency-resource position of a transmission signal, based on instruction information from AP 100 included in the User Info field. TXOP sharing controller 207 may output, to data generator 208, the control information on the data transmission in accordance with the TXOP sharing.

Data generator 208, for example, generates a data signal (e.g., CTS frame, data addressed to AP 100, or data addressed to another STA) based on the control information inputted from TXOP sharing controller 207 and the information inputted from User Info obtainer 206 and then outputs the data signal to error-correction encoder 209.

By way of example, data generator 208 may generate a CTS frame after the instruction on the TXOP sharing. Alternatively, data generator 208 may generate a data signal (e.g., PPDU) after transmission of a CTS frame (e.g., when SIFS elapses after transmission of CTS frame), for example.

Here, a portion of the radio parameters to be applied to the data signal (e.g., at least one of signal length, MCS, the number of spatial streams, and transmission power) may be determined by STA 200 based on a parameter such as the transmission buffer status or communication quality of STA 200. Incidentally, the signal length of the data may be, for example, a length of equal to or less than the allocated period indicated by AP 100. The transmission channel to be assigned to the data signal may be determined based on the assigned channel indicated by AP 100.

Error-correction encoder 209 performs error correction encoding on the data signal inputted from data generator 208 and outputs the encoded signal to modulator 210. A coding rate for the data signal may be determined by STA 200, for example.

Modulator 210 modulates the signal inputted from error-correction encoder 209 and outputs the modulated signal to radio transceiver 201. The modulation scheme applied in modulator 210 may be determined by STA 200, for example. Further, when the modulated signal is an OFDM signal, STA 200 (e.g., modulator 210) may form the OFDM signal by mapping the modulated signal to a frequency resource, performing the IFFT processing, and adding a CP.

### [Exemplary Operations of AP 100 and STA 200]

Next, exemplary operations of AP 100 and STA 200 according to the present embodiment will be described.

In the following, a description will be given of a method of instructing the TXOP sharing for a plurality of STAs 200 different from AP 100 (e.g., Non-AP STA) (e.g., allocation of a portion of transmission opportunity (TXOP) obtained by AP 100) by using a single Trigger frame (e.g., MU-RTS TXS Trigger frame) generated by AP 100 (e.g., Common Info generator 103, User Info generator 104 and Trigger frame generator 105).

Incidentally, the plurality of STAs 200 different from AP 100 may include, for example, a pair of STAs 200 that perform the P2P communication (e.g., inter-terminal communication).

### <Indication Example of STA-common Information>

The STA-common information may include, for example, information on a TXOP sharing mode and information on an allocated period for the TXOP sharing for STA 200.

AP 100 may, for example, generate information on a TXOP sharing mode subfield (e.g., TXOP sharing mode subfield value), based on the TXOP sharing mode table illustrated in FIG. 13. The TXOP sharing mode table illustrated in FIG. 13 may include, for example, information indicating the TXOP sharing for multiple STAs (e.g., TXOP Sharing Mode subfield value = 3).

For example, when the TXOP sharing for multiple STAs different from AP 100 is indicated, AP 100 may generate a Trigger frame including information indicating TXOP sharing mode subfield value = 3 in the TXOP sharing mode table illustrated in FIG. 13. In other words, AP 100 may configure a Common Info field that is common to STAs 200 in the Trigger frame with the information on the TXOP sharing for multiple STAs (e.g., information instructing multiple STAs to share transmission opportunity).

Further, when the information on the TXOP sharing for multiple STAs is configured, AP 100 may configure a plurality of User Info fields that is specific to the plurality of STAs 200 to which the TXOP sharing is applied in the Trigger frame, for example.

AP 100 may also generate, for example, information on an allocated period for STA 200 (e.g., a portion of TXOP obtained by AP 100). AP 100 may include the generated information on the allocated period in a UL length subfield of the Common Info field illustrated in FIG. 2, for example. Note that the information on the allocated period may be included in other areas, without limitation to the UL Length subfield.

Here, for example, in the information on the allocated period, the more coarse the time granularity of the allocated period is, the lower the number of indication bits of the information on the allocated period is. For example, AP 100 may indicate, to STA200, the information on the allocated period in some bit areas of the UL length subfield and configure the remaining bit areas to Reserved areas. Configuring the reserved areas can improve the scalability in future versions.

### <Indication Example of STA-specific Information>

The STA-specific information may include, for example, information on communication (e.g., destination of communication) in an allocated period of a TXOP and information on a frequency resource (e.g., assigned channel) used for the communication.

For example, AP 100 may configure, for STA 200 to which the TXOP sharing is applied, information indicating whether the communication in the allocated period is communication addressed to AP (communication between AP 100 and STA 200) or communication to another STA (P2P communication) (e.g., communication-type information) and include the configured information in the User Info field.

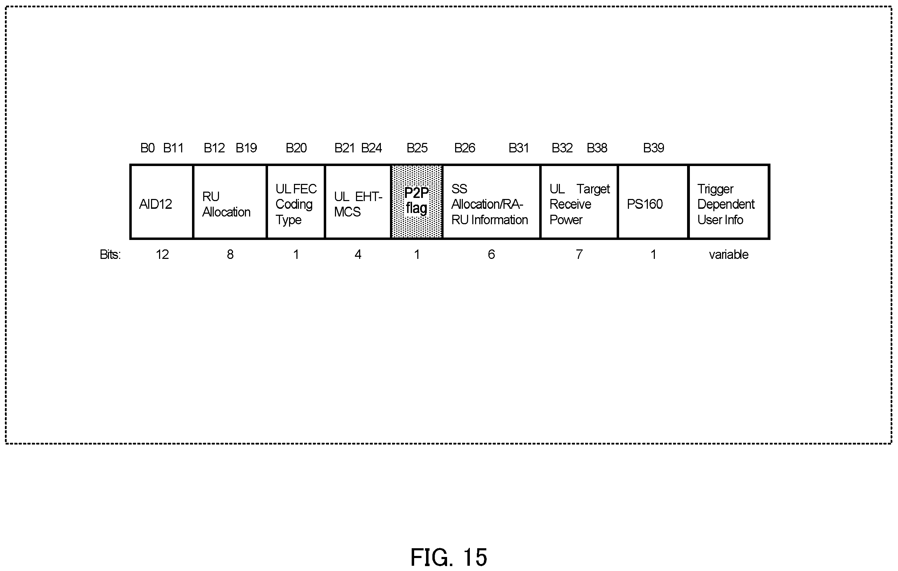

FIG. 15 illustrates an exemplary User Info field. For example, as illustrated in FIG. 15, AP 100 may configure the area of B25 that is a Reserved area in FIG. 3 with a subfield (e.g., "P2P flag" subfield") that indicates the communication-type information.

Note that the name of the subfield indicating the information on the communication in the allocated period is not limited to the P2P flag and may be other names. Further, other areas, without limitation to the area of B25, may be configured with the subfield indicating the communication-type information. Further, the communication type that can be indicated in the communication-type information is not limited to two types and may be three or more types.

Besides, for example, when the TXOP sharing mode for multiple STAs is applied (e.g., when TXOP sharing = 3 in FIG. 13), the area of B25 may be configured with a P2P flag subfield, and when the TXOP sharing mode for multiple STAs is not applied, the area of B25 may be configured to a Reserved area.

For example, when P2P flag subfield value = 0, the communication by STA200 in the allocated period indicated in the AID 12 subfield illustrated in FIG. 15 may be configured to the communication addressed to AP 100 (i.e., limited to communication addressed to AP 100). Further, for example, when P2P flag subfield value = 1, the communication by STA 200 in the allocated period indicated in the AID12 subfield illustrated in FIG. 15 may be configured to the P2P communication (i.e., limited to P2P communication). Incidentally, an association between a value of the P2P flag and the communication in the allocated period (e.g., any of communication with AP 100 and P2P communication) is not limited to the above-described examples.

Here, when P2P flag subfield value = 0 (e.g., communication with AP 100), a time length of a signal (SU PPDU) transmitted by STA 200 to AP 100 may be based on indication in the Common Info field (e.g., indication in UL length subfield). In other words, AP 100 may configure the Common Info field common to STAs 200 in the Trigger frame with information on a time length of an uplink transmission signal in at least some time of the transmission opportunity (TXOP). In this case, in the allocated period, time lengths of the respective transmission signals of a plurality of STAs 200 that communicates with AP 100 are configured to be common to each other. Thus, in the allocated period, even when the plurality of STAs 200 communicates with AP 100, reception timings of transmission signals from the plurality of STAs 200 become approximately the same in AP 100, and transmission timings of ACKs for the respective STAs 200 are become approximately the same, which makes it possible to inhibit overlap between the transmission timings and the reception timings in AP 100.

Incidentally, for example, STA200 may determine radio parameters (e.g., including MCS and the number of spatial streams) other than the time length of the transmission signal of STA200.

Besides, for example, AP 100 may generate, by using an RU allocation subfield of the User Info field illustrated in FIG. 15, information on a frequency resource (e.g., assigned channel (band in 20-MHz unit)) that is used by STA 200 in the communication in the allocated period (e.g., CTS frame transmission, communication with AP 100, or P2P communication).

The information on the assigned channel may indicate, for example, a frequency resource position of 20MHz × N to be allocated for STA200. For example, as an indication method of the information on the assigned-channel, the frequency-resource indication method for a CTS frame by MU-RTS used in 11ax may be applied.

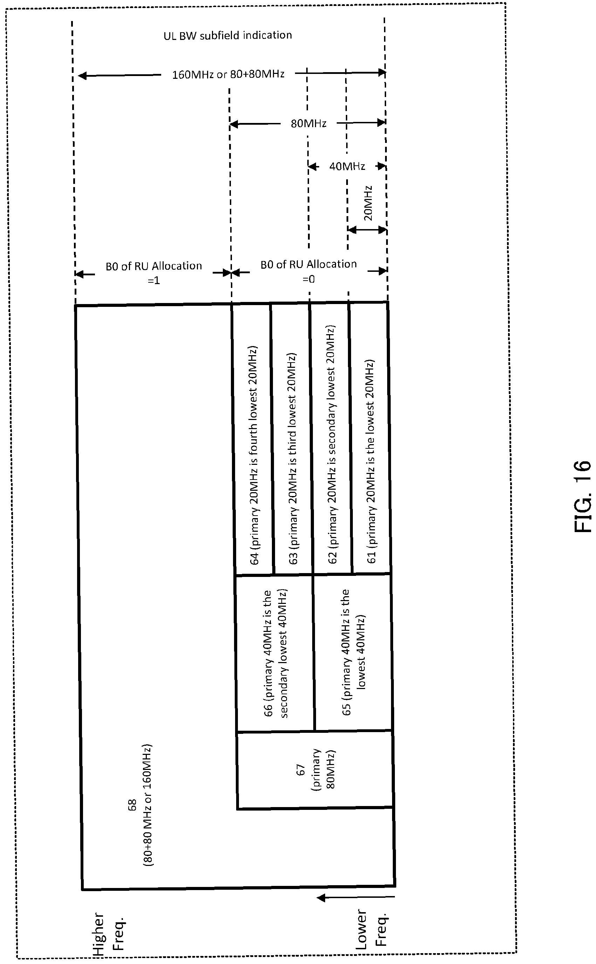

FIG. 16 illustrates an exemplary indication method of a frequency resource by an MU-RTS Trigger frame.

In MU-RTS supported in 11ax, for example, a frequency resource for CTS is individually indicated to each STA 200, with combination of a "UL BW subfield" included in a Common Info field of the MU-RTS Trigger frame and an "RU Allocation subfield" included in a User Info field of the MU-RTS Trigger frame. In one example, as illustrated in FIG. 16, the UL BW subfield designates an Operation bandwidth (e.g., 20 MHz, 40 MHz, 80 MHz, or 160 MHz) in uplink, and the RU allocation subfield designates a position of a frequency resource allocated for communication in an allocated period. In the present embodiment, a channel to be used by STA 200 in an allocated period for the TXOP sharing may be indicated by a method similar to the method illustrated in FIG. 16.

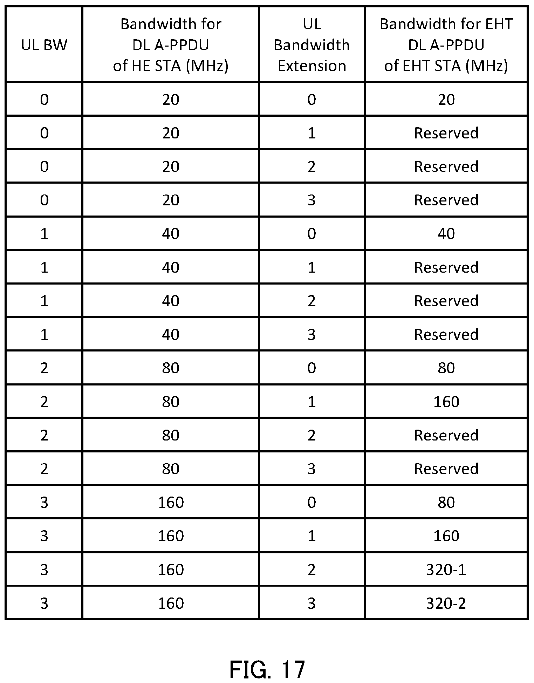

In addition, when a frequency resource position for communication in an allocated period is indicated in an Operation band including 320 MHz, which is newly supported in 1 1be, a "UL Bandwidth Extension subfield" included in the Special User Info field illustrated in FIG. 4 may be used, for example. For example, as illustrated in FIG. 17, the frequency resource position may be indicated to each STA 200 with a combination of the UL BW subfield of the Common Info field and the UL Bandwidth Extension subfield of the Special User Info field.

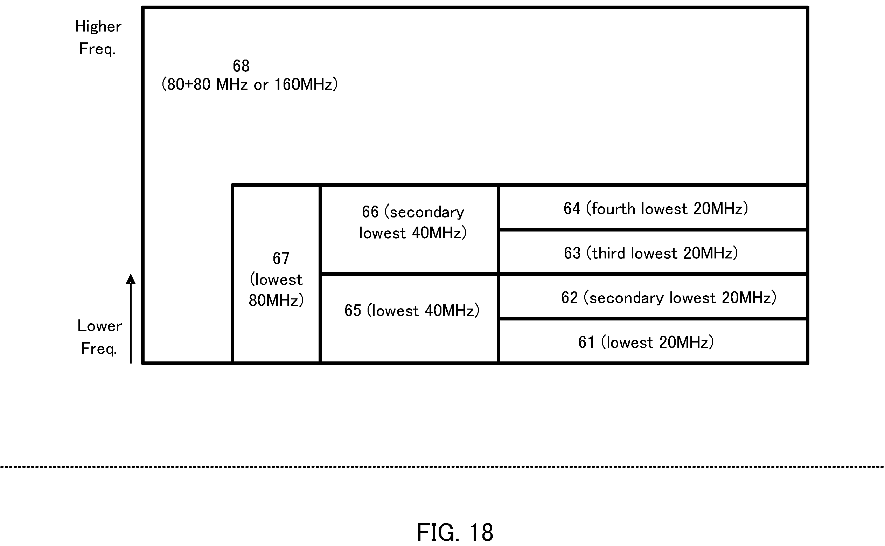

The indication method illustrated in FIG. 16 is a method of indicating a frequency resource position including the Primary 20-MHz channel, but the present embodiment is not limited to this, and a method of indicating frequency resources of any 20-MHz channel × N in an Operation band including no Primary 20-MHz channel may be used, as illustrated in FIG. 18, for example.

For example, in MU-RTS in 11ax, the frequency resource for CTS includes a primary channel, but in the present embodiment, it may be allowed to transmit, to STA 200 to which the TXOP sharing is applied, an uplink signal (e.g., CTS frame and data) by using a frequency resource including no primary channel in an allocated period.

For example, of a plurality of STAs 200 (e.g., including STA 1 and STA2) to which the TXOP sharing is indicated in a single MU-RTS TXS Trigger frame, when the transmission band for STA 1 is configured to the Primary 20 MHz, the transmission band for STA 2 may be configured to a frequency resource including no primary channel. In this case, STA 2 may transmit, in response to the MU-RTS TXS Trigger frame, the CTS frame and data by using the frequency resource including no primary channel. Further, STA 200 that has received the MU-RTS TXS Trigger frame may transmit the CTS frame, based on a carrier sensing result in the frequency resource for CTS indicated in the MU-RTS TXS Trigger frame, for example. For example, in a case where the frequency resource for CTS indicated in the MU-RTS TXS Trigger frame includes no primary channel, STA 200 may transmit the CTS frame in the indicated frequency resource even when the primary channel is busy.

The method of indicating an assigned channel is not limited to the case of indicating a frequency resource position of 20 MHz × N allocated for STA 200 as described above and may be a method of indicating other frequency resources.

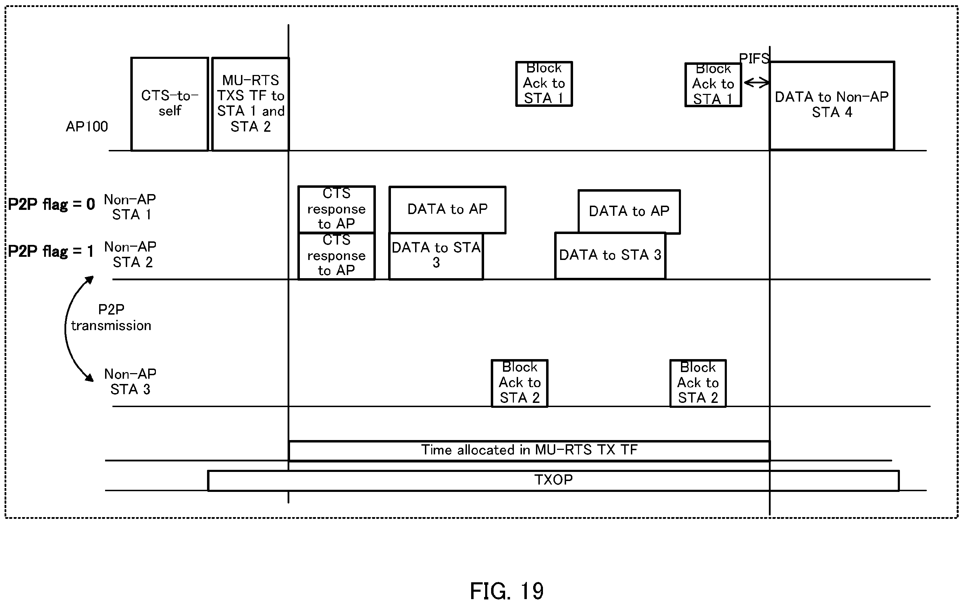

FIG. 19 illustrates an exemplary sequence of indicating the TXOP sharing for multiple STAs according to the present embodiment.

In FIG. 19, for example, AP 100 may indicate, as the STA-common information, information on a TXOP sharing mode and information on an allocated period for STA 200 (e.g., UL Length), to a plurality of STAs (e.g., STA 1 and STA 2) different from AP 100. For example, in FIG. 19, AP 100 may instruct STA 1 and STA 2 on the TXOP sharing for multiple STAs by indicating TXOP sharing mode subfield value = 3 illustrated in FIG. 13.

Further, in FIG. 19, for example, AP 100 may indicate, as the STA-specific information for each of the plurality of STAs 200, information (e.g., P2P flag) on communication in an allocated period (e.g., communication with AP 100 or P2P communication) and information on an assigned channel (e.g., RU allocation). For example, in FIG. 19, with the use of the MU-RTS TXS Trigger frame, AP 100 may instruct STA 1 on the communication with AP 100 in the allocated period by indicating P2P flag subfield value = 0 and instruct STA 2 on the P2P communication in the allocated period by indicating P2P flag subfield value = 1. Further, in FIG. 19, AP 100 may instruct STA 1 and STA 2 to perform communication with orthogonal frequency resources.

In FIG. 19, for example, STA 1 may transmit, based on the received MU-RTS TXS Trigger frame, a CTS frame (CTS response) and a data signal (DATA) addressed to AP 100 via an assigned channel to STA 1 in the allocated period for the TXOP sharing. Moreover, in FIG. 19, for example, STA 2 may transmit, based on the received MU-RTS TXS Trigger frame, a CTS frame and a data signal addressed to another STA (e.g., STA3) via an assigned channel to STA 2 in the allocated period for the TXOP sharing.

For example, in the example illustrated in FIG. 19, AP 100 performs, in the allocated period for the TXOP sharing, communication (e.g., reception of data signal and transmission of ACK) with one STA (e.g., STA 1) of STA 1 and STA 2 to which the TXOP sharing is applied. In other words, in FIG. 19, AP 100 does not communicate with STA 2, which is different from and other than STA 1, in the allocated period for the TXOP sharing. In the manner described above, AP 100 can inhibit overlap of the transmission and reception timings in AP 100 by instructing to perform communication with one of a plurality of STAs 200 to which the TXOP sharing is applied, in the allocated period for the TXOP sharing.

Further, in FIG. 19, for example, the radio parameters used for the TXOP sharing may be determined (or scheduled) by STA 200 instead of being scheduled by AP 100, which can achieve the TXOP sharing for a plurality of STAs 200 with the simple processing.

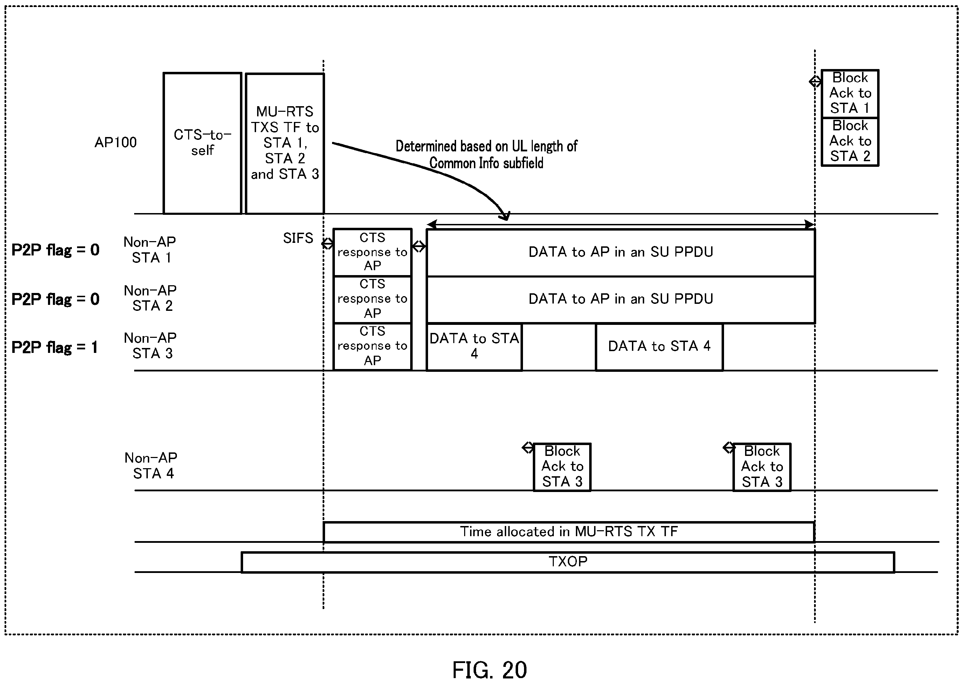

FIG. 20 illustrates another exemplary sequence of indicating the TXOP sharing for a plurality of STAs 200.

In FIG. 20, a single Trigger frame indicates the TXOP sharing for three STAs 200 (e.g., STA 1, STA2, and STA3). Further, for example, in FIG. 20, with the use of the MU-RTS TXS Trigger frame, AP 100 may instruct each of STA 1 and STA 2 on the communication with AP 100 in the allocated period by indicating P2P flag subfield value = 0 and may instruct STA 3 on the P2P communication in the allocated period by indicating P2P flag subfield value = 1. Further, in FIG. 20, AP 100 may instruct STA1, STA2, and STA 3 to perform communication with orthogonal frequency resources.

Moreover, in FIG. 20, AP 100 may indicate, as the STA-common information, information on an allocated period for STA 200 (e.g., UL Length). In other words, for example, a Common Info field of the MU-RTS TXS Trigger frame may include information on a time length (signal length) of the signal to be transmitted by each of a plurality of STAs 200 in the allocated period for the TXOP sharing (e.g., a portion of TXOP). Each STA 200 may determine the signal length of data (e.g., SU PPDU), based on the information included in the Common Info field.

For example, in FIG. 20, since P2P flag subfield value = 1 (P2P communication) is configured for STA 3, STA 3 may perform the P2P communication with another STA (e.g., STA 4) in the allocated period indicated in the UL Length subfield. For example, in the allocated period, STA 3 may determine a data size (signal length) with which the P2P communication is performed.

Further, for example, in FIG. 20, P2P flag subfield value = 0 (communication with AP 100) is configured for each of STA 1 and STA 2, STA 1 and STA 2 may each determine a signal length of a data signal addressed to AP 100 based on the allocated period indicated in the UL Length subfield. By way of example, as illustrated in FIG. 20, STA 1 and STA 2 may each configure the signal length of the data signal based on a period that can be used for transmission of the data signal, in the allocated period (e.g., period different from transmission period of CTS frame in the allocated period). The method of determining the signal length of a data signal is not limited to this and may be any method as long as it is a determination method common to a plurality of STAs 200.

Thus, even when a plurality of STAs 200 communicates with AP 100 in the TXOP sharing, signal lengths of data signals transmitted by the plurality of STAs 200 can be configured to be identical with each other; hence, reception timings of data signals for the plurality of STAs 200 and transmission timings of ACKs become approximately the same in AP 100, which makes it possible to inhibit overlap between the transmission timings and the reception timings in AP 100.

In FIG. 20, for example, the overlap between the transmission and the reception timings in AP 100 can be inhibited, and time resources for performing communication with AP 100 can be allocated to a plurality of STAs 200. Further, in FIG. 20, for example, the radio parameters different from and other than a signal length of a transmission signal (e.g., UL Length) may be determined (or scheduled) by STA 200 instead of being scheduled by AP 100, which can achieve the TXOP sharing for a plurality of STAs 200 with the simple processing.

Thus, in the present embodiment, AP 100 generates a Trigger frame including information for allocating some time of the TXOP obtained by AP 100 to a plurality of STAs 200 and transmits the Trigger frame to STAs 200. Meanwhile, STA200 controls, based on a single Trigger frame, an uplink transmission in the TXOP sharing for the plurality of STAs. Accordingly, in the present embodiment, it is possible to instruct a plurality of STAs 200 on the TXOP sharing by using a single Trigger frame, thereby improving the allocation efficiency in the TXOP sharing.

Further, in the present embodiment, in the FDM-basis TXOP sharing for multiple STAs, it possible to inhibit the overlap between the transmission timings and the reception timings in AP 100 by switching the type of uplink communication (e.g., communication with AP 100 or P2P communication) performed by each of a plurality of STAs 200 to which the TXOP sharing is applied or indicating signal lengths for the plurality of STAs 200 that communicates with AP 100.

Further, in the present embodiment, the TXOP sharing for multiple STAs is indicated to STA200 based on the MU-RTS TXS Trigger frame format (i.e., format specified in 11be Release 1) agreed in 11be Release 1. Thus, for example, a common Trigger frame format can be applied to a STA that corresponds to 11be Release 1 and supports the TXOP sharing for one STA (e.g., referred to as "11be Release 1 supporting STA") and a STA that supports the TXOP sharing for a plurality of STAs 200 in the present embodiment (e.g., STA supporting future versions). For example, AP 100 can indicate the TXOP sharing mode for the 11be Release 1 supporting STA by performing configuration of a TXOP sharing mode (e.g., value of 0, 1, or 2) to which the 11be Release 1 supporting STA corresponds (i.e., configuration limited to some values) with the use of the MU-RTS TXS Trigger frame format described in the present embodiment.

### (Embodiment 2)

In the present embodiment, a case of performing the TXOP sharing for a plurality of STAs by Time Division Multiplexing (TDM) will be described.

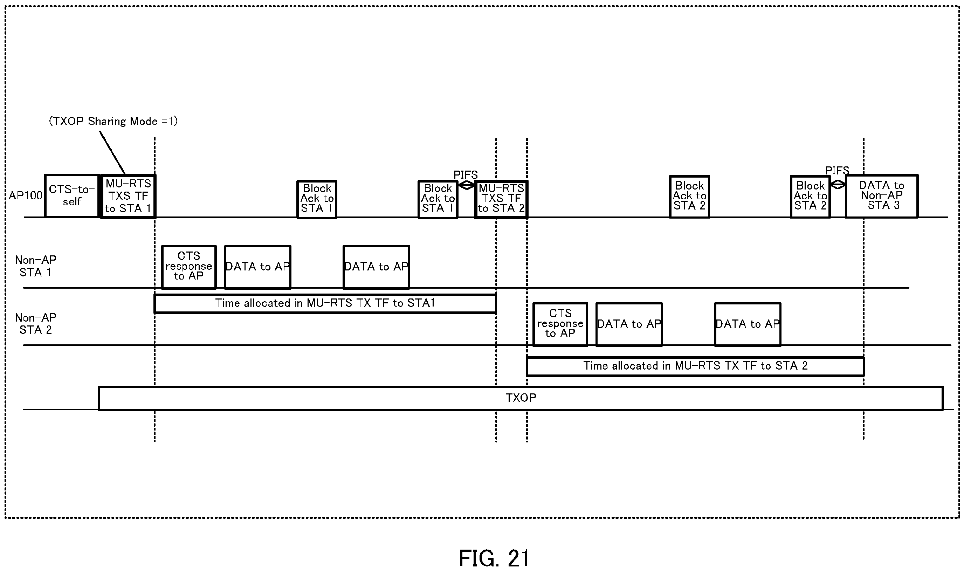

FIG. 21 illustrates an exemplary sequence in which an AP performs the TXOP sharing for a plurality of STAs (e.g., STA 1 and STA 2) by using an MU-RTS TXS Trigger frame supported in 11be Release 1 described in NPL 1. As illustrated in FIG. 21, in 11be Release 1, since the number of STAs to which the TXOP sharing can be indicated by using a single MU-RTS TXS Trigger frame is one, a plurality of MU-RTS TXS Trigger frames is used for instructing the plurality of STAs on the TXOP sharing. The use of the plurality of MU-RTS TXS Trigger frames may result in increased overhead and reduced throughput performance.

In the present embodiment, a description will be given of a method of performing the TXOP sharing for multiple STAs that is based on TDM (hereinafter may also be referred to as "TDM-basis TXOP sharing mode") by using one MU-RTS TXS Trigger frame.

### [Configuration of Radio Communication System]

A radio communication of the present embodiment may include AP 100 and STA 200 as with Embodiment 1.

### [Configuration of Base Station]

An exemplary configuration of AP 100 according to the present embodiment may be the same as that of FIG. 12. For example, in AP 100 according to the present embodiment, operations of Common Info generator 103 and User Info generator 104 may be different from those in Embodiment 1.

Common Info generator 103, for example, generates information on a TXOP sharing mode subfield including the TDM-basis TXOP sharing for multiple STAs, based on the information (e.g., TXOP sharing mode table) inputted from TXOP sharing mode configurator 102. For example, as with Embodiment 1, when the TXOP sharing is performed, Common Info generator 103 may generate information on a Common Info field of an MU-RTS TXS Trigger frame by configuring a Trigger type subfield with MU-RTS and configuring the TXOP sharing mode subfield with a value associated with the TXOP sharing to be performed. Moreover, Common Info generator 103 may, for example, include information on an allocated period for STA 200 in any subfield (e.g., UL length subfield) of the Common Info field (e.g., example thereof will be described later).

User info generator 104 may, for example, generate information on a User Info field based on the allocated radio resource (allocated period) in the TXOP sharing to be applied to each of STAs 200 inputted from scheduler 101. Further, for example, User Info generator 104 may generate a User info List by arranging, in the order of STAs 200 to be assigned in time domain, User Info fields corresponding to the respective STAs 200 based on the allocated radio resources (allocated periods) in the TXOP sharing. In other words, AP 100 may associate the transmission order of the plurality of STAs 200 in at least some time of the TXOP with the arrangement order of the User Info fields specific to the plurality of STAs 200 in the Trigger frame.

Processing of the other components in AP 100 may be the same as the processing in Embodiment 1, for example.

### [Configuration of Terminal]

An exemplary configuration of STA 200 according to the present embodiment may be the same as that of FIG. 14. For example, in STA200 according to the present embodiment, operations of Common Info obtainer 205, User Info obtainer 206, and TXOP sharing controller 207 may be different from those in Embodiment 1.

As with Embodiment 1, when a Trigger type of the Trigger frame inputted from error-correction decoder 203 is MU-RTS, for example, Common Info obtainer 205 obtains, as the STA-common information, instruction information on a TXOP sharing mode subfield included in a Common field in the Trigger frame. For example, the STA-common information may include, for example, information indicating a TDM-basis TXOP sharing mode for multiple STAs.

As with Embodiment 1, User Info obtainer 206 may perform reception processing of a plurality of User Info fields when the information indicating a TXOP sharing mode inputted from Common Info generator 103 indicates the TXOP sharing for multiple STAs, for example. For example, in the case of the TDM-basis TXOP sharing mode for multiple STAs, User Info obtainer 206 outputs, to TXOP sharing controller 207, the STA ID (e.g., AID) of each User Info field, the transmission order of the User Info fields in the User Info List, and information on the User Info fields to be indicated to STAs 200.

TXOP sharing controller 207 may, for example, determine (or judge) an allocated radio resource (e.g., allocated period) based on the STA-specific information and the STA-common information that are inputted from User Info obtainer 206, and then control data transmission in accordance with the TXOP sharing instructed from AP 100 (e.g., example thereof will be described later).

By way of example, in the case of the TDM-basis TXOP sharing mode for multiple STAs, TXOP sharing controller 207 may determine a frequency resource position of a transmission signal, based on carrier sensing by STA 200. For example, TXOP sharing controller 207 may configure a band in which the carrier sensing is cleared in an Operation band including the Primary 20 MHz to a transmission band. TXOP sharing controller 207 may also determine a time resource position (e.g., transmission timing) of a transmission signal, based on the transmission order of the User Info fields in the User Info List inputted from User Info obtainer 206, for example.

Processing of the other components in STA200 may be the same as the processing in Embodiment 1, for example.

### [Exemplary Operations of AP 100 and STA200]

Next, exemplary operations of AP 100 and STA 200 according to the present embodiment will be described.

In the following, a description will be given of an instruction method of the TDM-basis TXOP sharing for a plurality of STAs 200 by using a single Trigger frame (e.g., MU-RTS TXS Trigger frame) generated by AP 100.

Hereinafter, an indication example of a time resource of a signal in the allocated period for each of a plurality of STAs 200 (e.g., transmission timing or signal length) will be described.

### <Indication Example 1>

In Indication Example 1, STA200 may determine a time resource (e.g., transmission timing) for this STA 200 based on the transmission order of User Info fields included in a User Info List.

For example, in the User Info List, STA200 indicated in the first User Info field of the User Info fields excluding the Special User Info field may transmit, at the time of initial transmission in the allocated period, an SU PPDU after CTS frame transmission + SIFS, and may transmit, at the time of second and subsequent transmissions in the allocated period, an SU PPDU after reception of a signal (e.g., Block Ack) from AP 100 to this STA 200 + SIFS.

Further, for example, in the User Info List, STA 200 indicated in the M-th (where M is integer greater than one) User Info field of the User Info fields excluding the Special User Info field transmits an SU PPDU after receiving a signal transmitted from STA 200 indicated in M-1-th User Info field + SIFS. Thus, STA200 indicated in the M-th User Info field may specify in advance a STA ID (e.g., AID) of the M-1-th User Info field and then determine the transmission timing in this STA 200 based on, for example, detection of a signal of the STA ID assigned to the User Info field immediately before that for this STA 200.

Incidentally, AP 100 may indicate, for example, information on a total time resource to be allocated to a plurality of STAs 200, by using the Common Info field (e.g., UL Length subfield).

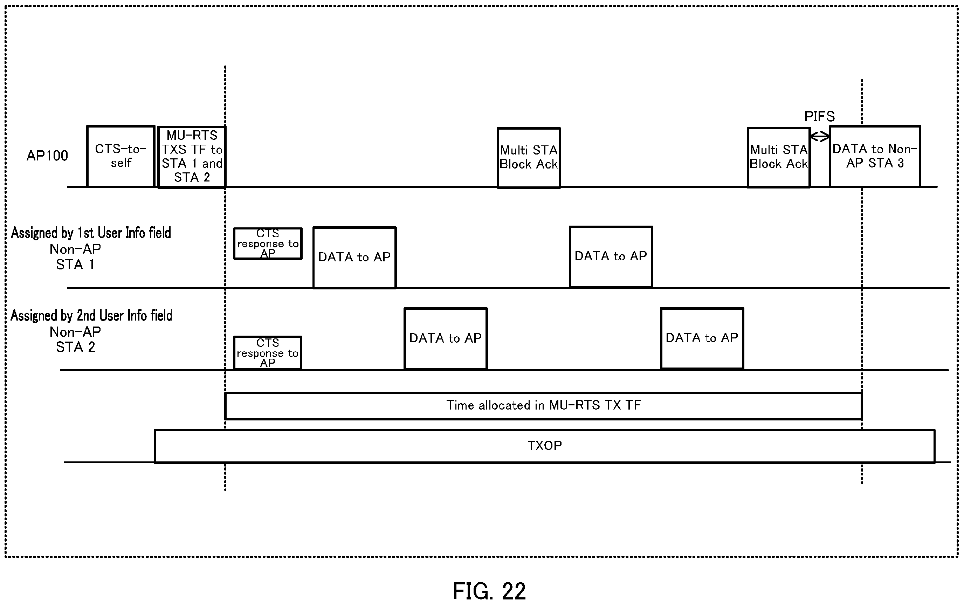

STA200 that has determined the transmission in the allocated period may determine a signal length of a transmission signal based on transmission buffer information on this STA 200 within a range smaller than the total time resource allocated by AP 100 (e.g., allocated period of Time allocated in MU-RTS TX TF in FIG. 22) and then transmit the signal, for example. In this case, STA 200 can freely determine the signal length, but each STA 200 determines the signal length in the transmission order indicated by AP 100, which may cause a situation where STA 200 in a later part of the transmission order cannot perform the transmission in the allocated period.

Further, for example, STA 200 that has determined the transmission in the allocated period may determine a signal length of a transmission signal within a time resource obtained by equally dividing the total time resource allocated by AP 100 by the assigned number of STAs (the number of User Info fields included in MU-RTS TXS Trigger frame) and then transmit the signal. In this case, the signal length determined by STA 200 is configured (e.g., limited) by the total time resource and the number of STAs, but all assigned STAs 200 can perform the transmission within the allocated period.

Incidentally, in Indication Example 1, for example, the communication in the allocated period may be configured to the communication to AP 100 and need not be configured to the P2P communication. This configuration makes it easier to identify a STA ID of another STA that transmits a data signal just before STA 200 transmits a data signal (SU PPDU), for example.

FIG. 22 illustrates an exemplary sequence of performing the TXOP sharing for multiple STAs in Indication Example 1.

In FIG. 22, AP 100 instructs STA 1 and STA 2 on the TXOP sharing, by using an MU-RTS TXS Trigger frame, for example. In FIG. 22, as one example, in a User Info List included in the MU-RTS TXS Trigger frame, STA 1 is assigned by the first User Info field and STA 2 is assigned by the second User Info field.

As illustrated in FIG. 22, STA 1 scheduled to the first User Info field may transmit a signal (e.g., CTS frame or SU PPDU) to AP 100 after receiving a signal (e.g., MU-RTS TXS Trigger frame or Block Ack) from AP 100.

Meanwhile, as illustrated in FIG. 22, STA2 scheduled to the second User Info field may transmit a signal (e.g., CTS frame or SU PPDU) to AP 100 after receiving a signal (e.g., SU PPDU) transmitted from STA 1.

In Indication Example 1, STAs 200 each determine a transmission timing in STA 200 in the allocated period, based on the transmission order of User Info fields for the plurality of STAs 200 in the MU-RTS TXS Trigger frame. In other words, the transmission timing (or transmission order) in each STA 200 in the allocated period is implicitly indicated to each STA 200 by the transmission order of the User Info fields. Therefore, according to Indication Example 1, it is possible to suppress an increase in overhead and to achieve the TDM-basis TXOP sharing for multiple STAs, by using a single MU-RTS TXS Trigger frame.

Incidentally, in FIG. 22, when STA 2 detect no signal from STA 1, for example, STA 2 need not transmit an SU PPDU to AP 100. When STA 2 transmit no SU PPDU, for example, a time during which a carrier sense of AP 100 is in IDLE exceeds PIFS; thus, AP 100 may perform an operation to retrieve the TXOP from STA 200. AP 100 may then reschedule the TXOP sharing for STA2, for example. Alternatively, AP 100 may transmit a Contention Free-End (CF-End) frame and discard the obtained TXOP.

### <Indication Example 2>

In Indication Example 2, as with Indication Example 1, STA 200 may determine a time resource (e.g., transmission timing or allocation order) allocated for each STA 200 in an allocated period, based on the transmission order of User Info fields included in a User Info List.

In Indication Example 1, a description has been given of the operation in which STA 200 itself determines a signal length of a transmission signal (SU PPDU) of this STA 200. Meanwhile, in Indication Example 2, AP 100 may configure a Trigger frame with information indicating a time length of an uplink transmission performed by a plurality of STAs 200 in at least some time of a TXOP. A signal length of a transmission signal of STA 200 may be commonly indicated from AP 100 to the plurality of STAs 200 by using a Common Info field (e.g., UL length subfield), for example.

Incidentally, radio parameters (e.g., including MCS and the number of spatial streams) other than the time length of the transmission signal of STA200 may be determined by STA 200 itself.

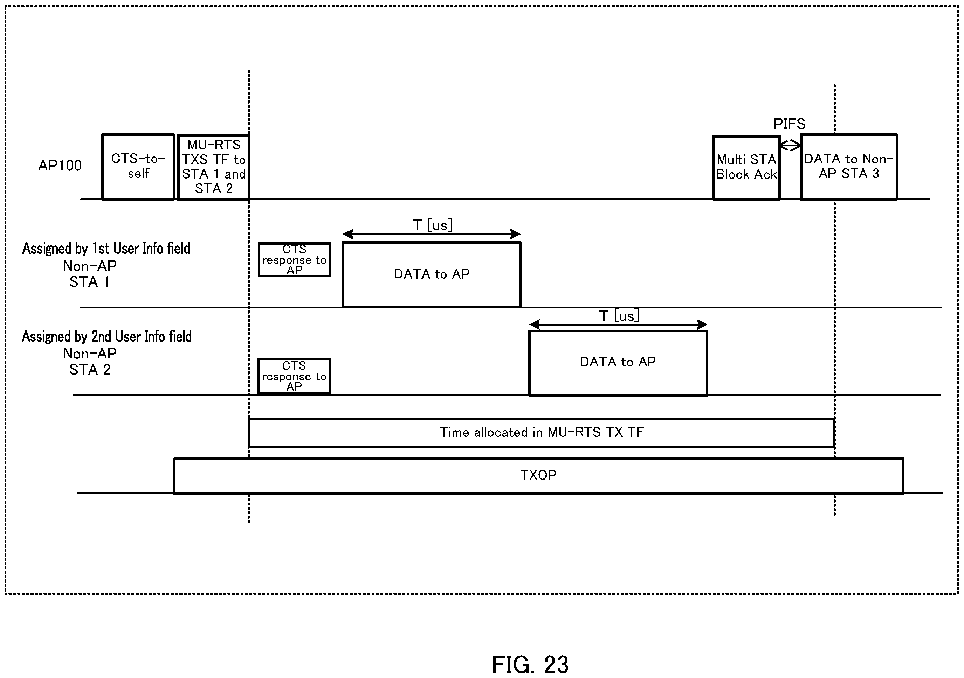

FIG. 23 illustrates an exemplary sequence of performing the TXOP sharing for a plurality of STAs 200 in Indication Example 2.

In FIG. 23, AP 100 instructs STA 1 and STA 2 on the TXOP sharing, by using an MU-RTS TXS Trigger frame, for example. In FIG. 23, as one example, in a User Info List included in the MU-RTS TXS Trigger frame, STA 1 is assigned by the first User Info field and STA 2 is assigned by the second User Info field.

Additionally, in FIG. 23, AP 100 indicates information on a signal length, T[us], for STA 200 by using a Common Info field of the MU-RTS TXS Trigger frame, for example.

In this case, as illustrated in FIG. 23, STA 1 scheduled to the first User Info field may transmit a transmission signal (SU PPDU) of the T[us] length after receiving the MU-RTS TXS Trigger frame from AP 100, e.g., after CTS frame transmission + SIFS.

Further, as illustrated in FIG. 23, STA 2 scheduled to the second User Info field may transmit a transmission signal (SU PPDU) of the T[us] length after receiving the MU-RTS TXS Trigger frame from AP 100, e.g., after CTS frame transmission + SIFS + T[us] + SIFS.

According to Indication Example 2, as with Indication Example 1, it is possible to suppress an increase in overhead and to achieve the TDM-basis TXOP sharing for multiple STAs, by using a single MU-RTS TXS Trigger frame.

Additionally, in Indication Example 2, STAs 200 each determine a time resource of a transmission signal based on the information included in the Common Info field, which makes it possible to determine the allocation start timing in each STA 200 without decoding a User info field different from and other than the User Info field for this STA 200. Hence, in Indication Example 2, as compared with Indication Example 1, the reception processing in STA 200 can be simplified.

Further, in Indication Example 2, since a time resource (signal length) of a transmission signal is commonly configured (e.g., limited) for STAs 200, an allocated period need not be indicated in a User Info field, thus reducing overhead.

Incidentally, for example, as information on a time resource of a transmission signal of STA 200 to be indicated in the Common Info field, the total allocated period for a plurality of STAs 200 may be indicated. In this case, for example, STA 200 may calculate an individual allocation period for STA 200 by STA 200 equally dividing the total allocated period by the number of User Info fields (the number of a plurality of STAs 200).

### <Indication Example 3>

In Indication Example 3, as with Indication Example 1, STA 200 may determine a time resource (e.g., transmission timing or allocation order) allocated for each STA 200 in an allocated period, based on the transmission order of User Info fields included in a User Info List.

In Indication Example 3, AP 100 may configure a Trigger frame with information indicating a time length of uplink transmission performed by a plurality of STAs 200 in at least some time of a TXOP. The signal length of the transmission signal of each STA 200 may be individually indicated from AP 100 to the plurality of STAs 200 by using a User Info field, for example.

Incidentally, radio parameters (e.g., including MCS and the number of spatial streams) other than the time length of the transmission signal of STA 200 may be determined by STA 200 itself.

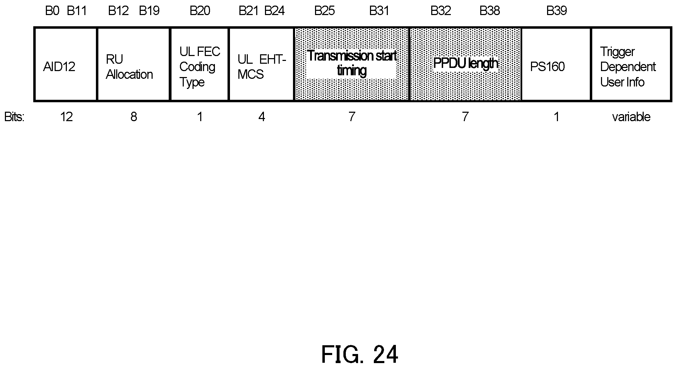

FIG. 24 illustrates an exemplary User Info field in Indication Example 3.

As illustrated in FIG. 24, the User Info field may include, for example, information on a signal length of a transmission signal of STA 200 (e.g., PPDU length subfield). The User Info field may also include, for example, information on a transmission start timing in STA 200 (e.g., Transmission start timing subfield). These pieces of information may be arranged, in the User Info field, for example, in areas different from the AID12 subfield and the RU allocation subfield, respectively. By way of example, in FIG. 24, the PPDU length subfield and the Transmission start timing subfield are configured in the area of B25 to B38 (e.g., in FIG. 3, areas corresponding to Reserved area, SS Allocation/RA-RU Information subfield, and UL Target Receive Power subfield).

Note that, in the User Info field, the areas (e.g., position and size) where the PPDU length subfield and the Transmission start timing subfield are arranged are not limited to the examples illustrated in FIG. 24. Further, the transmission start timing (Transmission start timing subfield) may not be indicated. When no transmission start timing is indicated, STA 200 may, for example, determine (e.g., calculate) the transmission start timing in STA 200 by receiving (e.g., decoding) a User Info field for another STA transmitted prior to the User Info field to which this STA 200 has been scheduled.

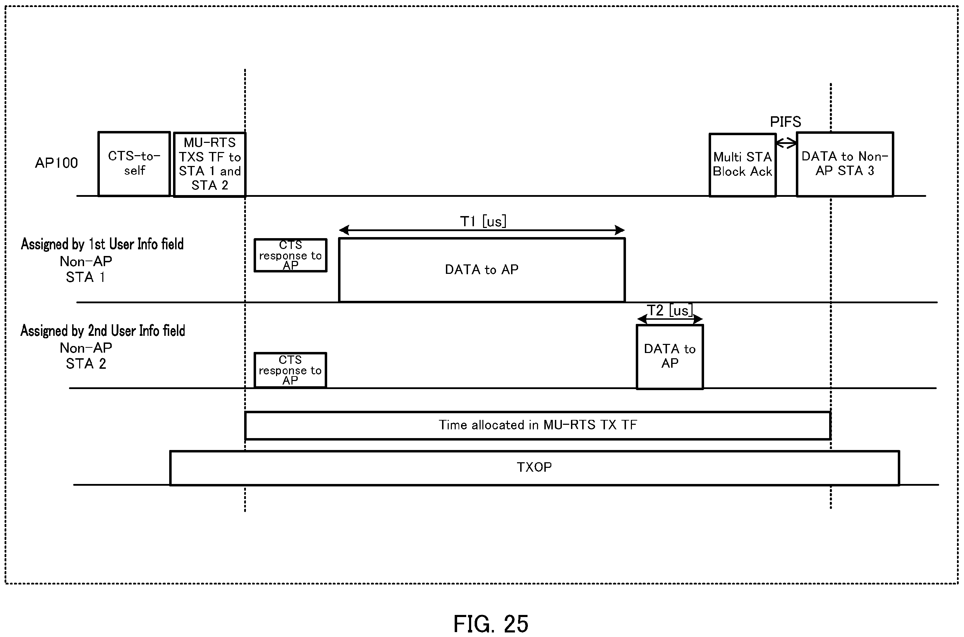

FIG. 25 illustrates an exemplary sequence of performing the TXOP sharing for multiple STAs 200 in Indication Example 3.

In FIG. 25, AP 100 instructs STA 1 and STA 2 on the TXOP sharing, by using an MU-RTS TXS Trigger frame, for example. In FIG. 25, as one example, in a User Info List included in the MU-RTS TXS Trigger frame, STA 1 is assigned by the first User Info field and STA 2 is assigned by the second User Info field.

In FIG. 25, AP 100 indicates information on a signal length, T1[us], for STA 1 and information on a signal length, T2[us] for STA 2, in a User Info field of the MU-RTS TXS Trigger frame, for example.

In this case, as illustrated in FIG. 25, STA 1 scheduled to the first User Info field may transmit a transmission signal (SU PPDU) of the T1[us] length after receiving the MU-RTS TXS Trigger frame from AP 100, e.g., after CTS frame transmission + SIFS.

Further, as illustrated in FIG. 25, STA 2 scheduled to the second User Info field may transmit a transmission signal (SU PPDU) of the T2[us] length after receiving the MU-RTS TXS Trigger frame from AP 100, e.g., after CTS frame transmission + SIFS + T1[us] + SIFS.

In the example illustrated in FIG. 25, the User Info field need not include the Transmission start timing subfield illustrated in FIG. 24. In this case, STA 2 may obtain a value (e.g., T1) of the PPDU length subfield of the User Info field of STA 1 that precedes STA 2 by one in the arrangement order of User Info fields and then determine a transmission timing of a transmission signal. This suppresses an increase in overhead in the User Info field.

Alternatively, in the example illustrated in FIG. 25, the User Info field may include the Transmission start timing subfield illustrated in FIG. 24. In this case, the User Info field for each STA 200 may include information (T1 in example of FIG. 25) on a signal length of at least one STA that precedes STA 2 in the transmission order of transmission signals (or arrangement order of User Info fields). For example, in the example of FIG. 25, STA 2 may determine a transmission timing of a transmission signal based on a value of the Transmission start timing subfield of the User Info field for STA2 (e.g., value corresponding to T1). In this situation, STA200 need not perform reception processing of User Info fields for other STAs, thus simplifying the processing in STA 200.

According to Indication Example 3, as with Indication Example 1 and Indication Example 2, it is possible to suppress an increase in overhead and to achieve the TDM-basis TXOP sharing for multiple STAs, by using a single MU-RTS TXS Trigger frame.

In addition, according to Indication Example 3, for example, since AP 100 can determine the time allocation of a transmission signal based on the transmission buffer status of each STA 200, it is possible to improve the allocation efficiency of a time resource and improve also the throughput.

Indication Examples 1 to 3 of allocated periods have been each described, thus far.

Thus, in the present embodiment, AP 100 generates a Trigger frame including information for allocating some time of the TXOP obtained by AP 100 to a plurality of STAs 200 and transmits the Trigger frame to STAs 200. Meanwhile, STA200 controls, based on a single Trigger frame, an uplink transmission in the TXOP sharing for the plurality of STAs. Accordingly, in the present embodiment, it is possible to instruct a plurality of STAs 200 on the TXOP sharing by using a single Trigger frame, thereby improving the allocation efficiency in the TXOP sharing, as with Embodiment 1.

Further, in the present embodiment, in the TDM-basis TXOP sharing for multiple STAs, indicating the time resource (e.g., transmission order, transmission start timing, or signal length) of the transmission signal of each of a plurality of STAs 200 to which the TXOP sharing is applied makes it possible to inhibit the overlap between the transmission timings and the reception timings in AP 100.

Incidentally, as in the present embodiment, in the case of the TDM-basis TXOP sharing for multiple STAs, the overlap between the transmission and reception timings in AP 100 does not occur; hence, a communication method in an allocated period (e.g., P2P flag subfield described in Embodiment 1) need not be indicated in a User Info field.

Further, as illustrated in FIGS. 22, 23, and 25, after receiving data of a plurality of STAs 200 subjected to the TXOP sharing, AP 100 may transmit a response signal (e.g., Multi-STA Block ACK) to the data of the plurality of STAs 200. This reduces overhead of Block ACK transmitted from AP 100, for example.

Alternatively, at the final timing in the allocated period subjected to the TXOP sharing, AP 100 may collectively indicate ACK information for each STA 200 in the allocated period with Multi-STA Block ACK. This reduces overhead for the ACK indication by AP 100 and improves the throughput performance, for example.

The indication of a response signal to data of a plurality of STAs 200 is not limited to the method of collectively transmitting ACK information for a plurality of STAs 200 and may be a method of individually indicating ACK information to a plurality of STAs 200.

Further, in Indication Examples 1 to 3, an example has been described in which the transmission timing in each STA 200 is indicated based on the transmission order of User Info fields in the MU-RTS TXS Trigger frame, but the present disclosure is not limited to this example, and the transmission timing (or time resource) in each STA 200 may be explicitly indicated to STA 200 in the User Info fields.

The embodiments of the present disclosure have been each described, thus far.

### (Other Embodiments)

(1) In the above-described embodiments, as an example, a case has been described where a TXOP sharing mode for multiple STAs and a TXOP sharing mode for one STA 200 are indicated in the TXOP Sharing Mode subfield, as illustrated in FIG. 13, but the present disclosure is not limited to this case. In one example, a subfield used for indicating the TXOP sharing mode for multiple STAs and a subfield used for indicating the TXOP sharing mode for one STA are different from each other.

For example, for the indication of a TXOP sharing mode for a plurality of STAs, a subfield of any area not used for an MU-RTS TXS Trigger frame (e.g., area to be Reserved area) may be used, in the Common Info field illustrated in FIG. 2. By way of example, in the Common Info field illustrated in FIG. 2, at least some areas of the subfields of MU-MIMO HE-LTF Mode, Number Of HE-LTF Symbols And Midamble Periodicity, UL STBC, LDPC Extra Symbol Segment, AP Tx Power, Pre-FEC Padding Factor, PE Disambiguity, UL Spatial Reuse, and Doppler subfields may be used for indicating the TXOP sharing mode for the plurality of STAs 200.

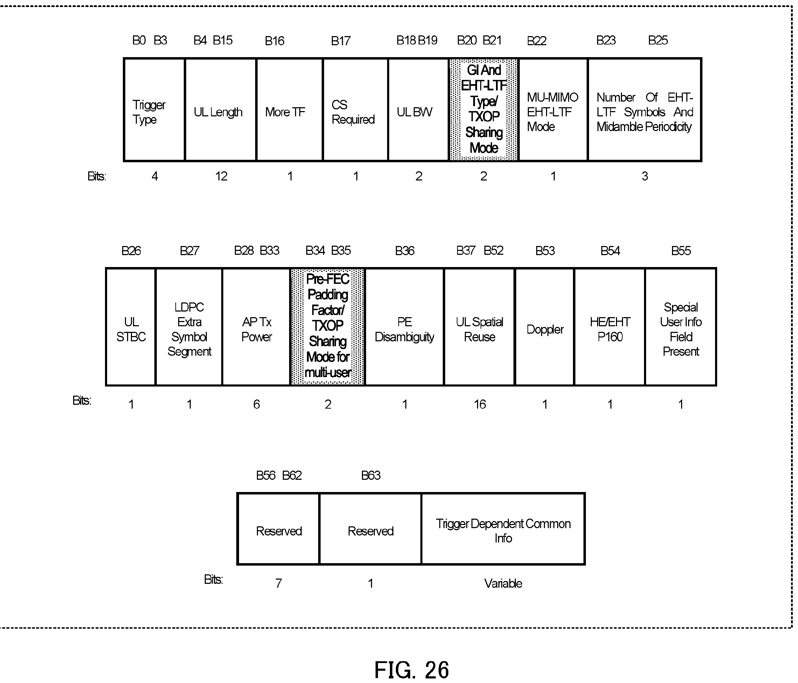

By way of example, as illustrated in FIG. 26, when the Trigger type is MU-RTS, the area of B34 to B35 (Pre-FEC Padding Factor subfield in FIG. 2) may be configured as indication information on the TXOP sharing mode for multiple STAs (e.g., TXOP Sharing Mode for multi-user subfield).

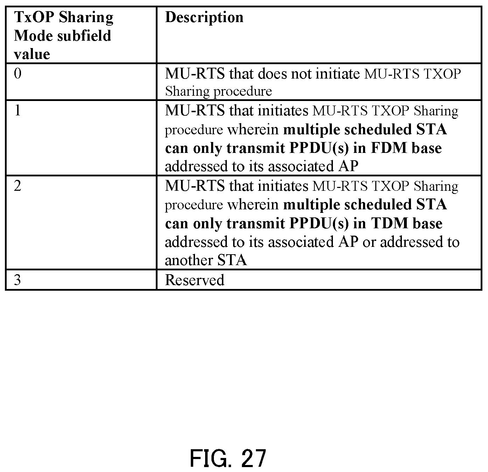

FIG. 27 illustrates information (e.g., information in table format) indicating an association between TXOP sharing mode for multi-user and information indicating a TXOP sharing mode in a Trigger frame. As illustrated in FIG. 27, the TXOP sharing mode for multi-user may include a mode indicating the FDM-basis TXOP sharing for multiple STAs described in Embodiment 1 (e.g., TxOP Sharing Mode subfield value = 1) and a mode indicating the TDM-basis TXOP sharing for multiple STAs described in Embodiment 2 (e.g., TxOP Sharing Mode subfield value = 2).

This improves the flexibility of indication of a TXOP sharing mode for a plurality of STAs 200.

(2) In the above-described embodiments, a case has been described where AP 100 indicates the TXOP sharing to a plurality of STAs 200, but the apparatus to which the TXOP sharing is indicated is not limited to a STA.

For example, the TXOP-sharing indication methods from AP 100 to a plurality of STAs 200 described in Embodiments 1 and 2 may be applied to an indication method of radio resource (time resource and frequency resource) allocation from a Sharing AP to Shared APs in Multi-AP Coordination transmission.

The Multi-AP Coordination transmission includes, for example, "Coordinated-Frequency Division Multiple Access (FDMA)" where different frequency resources are allocated to a plurality of APs and "Coordinated-Time Division Multiple Access (TDMA)" where different time resources are allocated to a plurality of APs. In these types of Multi-AP Coordination transmission, the above-mentioned indication method using the MU-RTS TXS Trigger frame may be used for the radio resource allocation from a Sharing AP to a Shared AP.

For example, the above-mentioned TXOP sharing (radio resource allocation) from AP 100 to multiple STAs may be replaced with the radio resource allocation (including TXOP sharing) from a Shared AP to multiple Sharing APs in the Multi-AP Coordination transmission. By way of example, as with the TXOP sharing from AP 1 to STA 11 and STA 12 that are connected to AP 1 in the above-described embodiments, the indication method using the MU-RTS TXS Trigger frame in the above-described embodiments may be used for radio resource allocation from AP 1, which is a Shared AP, to AP 2 and AP 3, which are Sharing APs.

Further, the above-mentioned TXOP sharing (radio resource allocation) from an AP to a plurality of P2P STAs may be replaced with radio resource allocation (including TXOP sharing) from a Shared AP to a plurality of pairs of Sharing APs and STAs under the Sharing APs in the Multi-AP Coordination transmission. In one example, as with the TXOP sharing from AP 1 to P2P pair 1 (e.g., referred to as STA 11 and STA 12) and P2P pair 2 (e.g., referred to as STA 13 and STA 14) that are connected to AP 1 in the above-described embodiments, the indication method using the MU-RTS TXS Trigger frame in the present embodiment may be used for radio resource allocation from AP 1 (Shared AP) to a pair of AP 2 (Sharing AP) and STA 21 (under AP 2) and to a pair of AP 3 (Sharing AP) and STA 31 (under AP 3) in the Multi-AP Coordination transmission.

Further, in the Multi-AP Coordination transmission, when the MU-RTS TXS Trigger frame is used, a TXOP sharing mode for the Multi-AP Coordination transmission may be explicitly indicated. For example, the TXOP sharing mode for the Multi-AP Coordination transmission may be indicated in a Reserved area for the TXOP Sharing Mode of the Common Info field illustrated in FIG. 2. Alternatively, as in FIG. 26, a subfield that indicates the TXOP sharing mode for the Multi-AP Coordination transmission may be provided as a subfield portion (e.g., subfield portion not used for CTS frame transmission) of the Common Info field.

(3) In Embodiment 1, when AP 100 instructs a plurality of P2P pairs (pairs of STAs 200 that perform P2P communication) on the FDM-basis TXOP sharing, the following procedures may be executed between AP 100 and STAs 200.

Here, a STA pair that performs the P2P is configured by a procedure called Tunneled Direct Link Setup (TDLS) in the 802.11 standard, for example. In TDLS, pre-configuration of the P2P communication is performed by relaying, at an AP, exchanges of TDLS request frames and TDLS response frames for the STA pair. Since contents of the configuration in TDLS are exchanged with encapsulated data, the AP does not grasp the configuration contents for P2P, including which STA pair has configured P2P.

Therefore, in an exemplary embodiment of the present disclosure, for the purpose of implementation of the TXOP sharing for the P2P communication by AP 100, STA 200 that performs P2P is expected to indicate (request) predetermined information to AP 100 in advance.

By way of example, STA 200 that performs P2P may indicate a P2P resource allocation request to AP 100 after configuring TDLS. As the P2P resource allocation request, STA200 may indicate, to AP 100, a transmission buffer status (Buffer Status Report) for P2P, for example. Further, after configuring TDLS, STA200 may indicate, to AP 100, that STA 200 is a STA that has configured TDLS, for example. STA200 may also indicate, to AP 100, information (e.g., STA ID) on another STA, which is a P2P-communication counterpart of STA 200, for example. Further, STA 200 may indicate in advance, to AP 100, Capability relating to whether a STA pair that performs the P2P communication can communicate in Secondary channel, for example. Moreover, when executing Off-channel (e.g., configuration for P2P communication outside of Operation band of AP 100) after configuring TDLS, STA 200 may indicate implementation of the Off-channel to AP 100.

Alternatively, without STA 200 indicating the information to AP 100 after configuring TDLS, a Direct link configuration procedure for the TXOP sharing may be specified in place of the TDLS configuration procedure specified by the 802.11 standard. In the Direct link configuration procedure for the TXOP sharing, for example, AP 100 relays request/response frame exchanges for the Direct link configuration between STAs 200 that perform P2P, and AP 100 corresponding to the TXOP sharing may decode and interpret contents of the request/response frames. For example, the request/response frames may include a frequency resource used for the P2P communication (e.g., 20-MHz subchannel to be used), information on STA that is a destination of the P2P communication, and the Capability information. In this case, the information on Direct Link may be indicated to AP 100 simultaneously with the Direct Link configuration.

This allows AP 100 to schedule the FDM-basis TXOP sharing for a STA pair with a transmission buffer for P2P. Further, for example, in regard to a STA pair that performs P2P executing the Off-channel, AP 100 may exclude this STA pair from an object of the TXOP sharing because the scheduling in the Operation bandwidth of AP 100 cannot be performed.

Incidentally, the P2P communication is not limited to communication in a channel including the Primary 20-MHz channel, and in an allocated period subjected to the TXOP sharing, communication in the Secondary channel including no Primary 20-MHz channel may be allowed.

For example, as illustrated in FIG. 18, AP 100 may instruct, in an RU allocation subfield of a User Info field, a STA pair that performs P2P on a 20 MHz × N channel, by using the indication of a frequency resource position for a CTS frame by MU-RTS.

In addition, AP 100 determines a frequency resource (channel) used for transmission and reception by a STA pair that performs the P2P communication in the allocated period subjected to the TXOP-sharing and then indicates the determined resource to the STA pair, so that the STA pair need not detect the channel via which the STA pair transmits and receives a signal, which can simplify the reception processing in STA 200.

Incidentally, for the previous indication of the frequency resource (channel) used for the transmission and reception in the allocated period subjected to the TXOP-sharing, a mechanism of the Off-channel configuration for negotiation of a channel used for the transmission and reception by the P2P STA pair in TDLS can be repurposed, for example.

Further, when instructing the P2P communication in the allocated period subjected to the TXOP-sharing, AP 100 may include, in the User Info field in the Trigger frame, for example, a STA ID of a receiving STA in the P2P communication, in addition to a STA ID of a transmitting STA in the P2P communication. For example, when each of a STA pair that performs the P2P communication is connected to different APs, AP 100 to which the transmitting STA connects does not grasp information on the receiving STA. In this case, the information on the receiving STA (e.g., STA ID and the like) may be indicated from the transmitting STA to AP 100 (e.g., indication may be made mandatory).

This allows the STA pair that performs the P2P communication to release NAV by decoding the Trigger frame and detecting that the STA ID of each STA is specified, thereby achieving the P2P communication in the allocated period subjected to the TXOP-sharing. Further, when a STA ID of a receiving STA in the P2P communication is not included in the Trigger frame and the receiving STA detects that a STA ID of a STA that is the P2P communication counterpart thereof is specified in the Trigger frame, a method is possible in which NAV is released and the P2P communication in the allocated period subjected to the TXOP-sharing is thus achieved.

(4) For each sequence diagram illustrated in the above-described embodiments, a case has been described, as an example, where a response is made to an MU-RTS TXS Trigger frame with a CTS frame, but an exemplary embodiment of the present disclosure is not limited to this. In one example, AP 100 may indicate the presence or absence of response with the CTS frame to STA 200 by using a Trigger frame. This makes it possible to omit the response with the CTS frame from STA 200 in an environment where a hidden terminal is expected to be less likely to occur, thus improving the throughput performance.

(5) In the above-described embodiments, the fields in which control information such as a TXOP Sharing Mode, a P2P flag, a Transmission start timing, or a PPDU length is arranged is not limited to the above-described fields, and the information may be arranged in other fields.

Further, in the above-described embodiments, the field indicating an allocated period for the TXOP sharing is not limited to a UL Length subfield and may be other subfields.

Further, in the above-described embodiments, the configuration of a Trigger frame, and the configurations of a Common Info field and a User Info field in the Trigger frame are not limited to the above-described examples and may be other configurations in which, in the above-described fields, at least one of the addition of another subfield and the deletion of some subfields has been performed, for example.

Further, it is possible to combine the FDM-basis TXOP sharing for multiple STAs described in Embodiment 1 with the TDM-basis TXOP sharing for multiple STAs described in Embodiment 2. For example, in an allocated period, a plurality of STAs 200 to be assigned in the TXOP sharing may be signal-multiplexed in a resource different in at least one of a frequency resource and a time resource.

Further, in the above-described embodiments, a case has been described, as an example, where an MU-RTS TXS Trigger frame is used for indication of a Sharing AP to multiple STAs, but a Trigger type for the indication of the Sharing AP to the multiple STAs is not limited to MU-RTS and may be other Trigger types or newly defined Trigger types in future versions.

Further, another STA to which STA 200 makes an indication in the P2P communication may be a STA under AP 100 to which this STA 200 is connected or may be any STA under an AP different from AP 100 to which this STA 200 is connected.

Further, in the above-described embodiments, a description has been given based on the format of 1 1be, as an example, but the format to which an exemplary embodiment of the present disclosure is applied is not limited to the format of 11be. An exemplary embodiment of the present disclosure may be applied to, for example, IEEE 802.11bd (Next Generation V2X (NGV)), which is the next-generation standard of IEEE 802.11p standard for automotive applications.

6. Information indicating whether STA 200 supports the functions, operations, or processes that have been described in the above-mentioned embodiments may be transmitted (or indicated) from STA 200 to AP 100, as capability information or a capability parameter of/for STA 200, for example.

The capability information may include information elements (IEs) that individually indicate whether STA 200 supports at least one of the functions, operations, or processes that have been described in the above-mentioned embodiments. Alternatively, the capability information may include information elements that indicate whether STA 200 supports a combination of any two or more of the functions, operations, or processes that have been described in the above-mentioned embodiments. The information elements may be also simply called elements.

AP 100 may determine (or decide or assume), for example, based on the capability information received from STA 200, the functions, operations, or processes that are supported (or not supported) by STA 200, which is a transmission source of the capability information. AP 100 may execute operations, processes, or control in accordance with a determination result based on the capability information. By way of example, AP 100 may control, based on the capability information received from STA 200, the TXOP sharing for multiple STAs.

Note that in a case where STA 200 does not entirely support the functions, operations, or processes described in the above-mentioned embodiments, such an unsupported part of the functions, operations, or processes may be interpreted as a limitation in STA 200. For example, information or a request relating to such limitation may be indicated to AP 100.

The information on the capability or the limitation of STA 200 may be defined by standards or may be implicitly indicated to AP 100 in association with information known in AP 100 or information to be transmitted to AP 100, for example.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI herein may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module and one or more antennas. The RF module may include an amplifier, an RF modulator/demodulator, or the like. Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)."

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as, e.g., a base station, an access point, and any other apparatus, device or system that communicates with or controls apparatuses such as those in the above non-limiting examples.

An access point according to an embodiment of the present disclosure includes: control circuitry, which, in operation, generates a control signal for allocating, for an uplink transmission performed by a plurality of terminals, at least some time of an obtained transmission opportunity; and
transmission circuitry, which, in operation, transmits the control signal.

In an exemplary embodiment of the present disclosure, the plurality of terminals includes a terminal that performs inter-terminal communication.

In an exemplary embodiment of the present disclosure, the control circuitry configures a common information field common to the plurality of terminals in the control signal with information indicating, to the plurality of terminals, sharing of the transmission opportunity.

In an exemplary embodiment of the present disclosure, when configuring the information indicating the sharing of the transmission opportunity, the control circuitry configures the control signal with a user information field specific to each of the plurality of terminals.

In an exemplary embodiment of the present disclosure, the control circuitry configures a user information field specific to each of the plurality of terminals in the control signal with information indicating whether communication in the at least some time of the transmission opportunity is communication between the access point and each of the plurality of terminals or inter-terminal communication.

In an exemplary embodiment of the present disclosure, the control circuitry configures a common information field common to the plurality of terminals in the control signal with information on a time length of an uplink transmission signal in the at least some time of the transmission opportunity.

In an exemplary embodiment of the present disclosure, the control circuitry associates a transmission order of the plurality of terminals in the at least some time of the transmission opportunity with an arrangement order of user information fields specific to the plurality of terminals in the control signal.

In an exemplary embodiment of the present disclosure, the control circuitry configures the control signal with information indicating a time length of the uplink transmission performed by the plurality of terminals in the at least some time of the transmission opportunity.

In an exemplary embodiment of the present disclosure, the control circuitry configures, in the control signal, at least one of a common information field common to the plurality of terminals and/or a user information field specific to each of the plurality of terminals with the information indicating the time length of the uplink transmission.

A terminal according to an embodiment of the present disclosure includes: reception circuitry, which, in operation, receives a control signal for allocating, for an uplink transmission performed by a plurality of terminals, at least some time of a transmission opportunity obtained by an access point; and control circuitry, which, in operation, controls the uplink transmission in the at least some time of the transmission opportunity, based on the control signal.

A communication method according to an embodiment of the present disclosure includes: generating, by an access point, a control signal for allocating, for an uplink transmission performed by a plurality of terminals, at least some time of an obtained transmission opportunity; and
transmitting, by the access point, the control signal.

A communication method according to an embodiment of the present disclosure includes: receiving, by a terminal, a control signal for allocating, for an uplink transmission performed by a plurality of terminals, at least some time of a transmission opportunity obtained by an access point; and
controlling, by the terminal, the uplink transmission in the at least some time of the transmission opportunity, based on the control signal.

The disclosure of Japanese Patent Application No. 2021-100141, filed on June 16, 2021, including the specification, drawings and abstract, is incorporated herein by reference in its entirety.

### Industrial Applicability

An exemplary embodiment of the present disclosure is useful for radio communication systems.

### Reference Signs List

100 AP
101 Scheduler
102, 204, TXOP sharing mode configurator
103 Common Info generator
104 User Info generator
105 Trigger frame generator
106, 209 Error-correction encoder
107, 210 Modulator
108, 201 Radio transceiver
109, 202 Demodulator
110, 203 Error-correction decoder
111 STA information obtainer
200 Terminal
205 Common Info obtainer
206 User Info obtainer
207 TXOP sharing controller
208 Data generator

## Claims

1. An access point, comprising:
control circuitry, which, in operation, generates a control signal for allocating, for an uplink transmission performed by a plurality of terminals, at least some time of an obtained transmission opportunity; and
transmission circuitry, which, in operation, transmits the control signal.

2. The access point according to claim 1, wherein the plurality of terminals includes a terminal that performs inter-terminal communication.

3. The access point according to claim 1, wherein the control circuitry configures a common information field common to the plurality of terminals in the control signal with information indicating, to the plurality of terminals, sharing of the transmission opportunity.

4. The access point according to claim 3, wherein, when configuring the information indicating the sharing of the transmission opportunity, the control circuitry configures the control signal with a user information field specific to each of the plurality of terminals.

5. The access point according to claim 1, wherein the control circuitry configures a user information field specific to each of the plurality of terminals in the control signal with information indicating whether communication in the at least some time of the transmission opportunity is communication between the access point and each of the plurality of terminals or inter-terminal communication.

6. The access point according to claim 1, wherein the control circuitry configures a common information field common to the plurality of terminals in the control signal with information on a time length of an uplink transmission signal in the at least some time of the transmission opportunity.

7. The access point according to claim 1, wherein the control circuitry associates a transmission order of the plurality of terminals in the at least some time of the transmission opportunity with an arrangement order of user information fields specific to the plurality of terminals in the control signal.

8. The access point according to claim 7, wherein the control circuitry configures the control signal with information indicating a time length of the uplink transmission performed by the plurality of terminals in the at least some time of the transmission opportunity.

9. The access point according to claim 8, wherein the control circuitry configures, in the control signal, at least one of a common information field common to the plurality of terminals and/or a user information field specific to each of the plurality of terminals with the information indicating the time length of the uplink transmission.

10. A terminal, comprising:
reception circuitry, which, in operation, receives a control signal for allocating, for an uplink transmission performed by a plurality of terminals, at least some time of a transmission opportunity obtained by an access point; and
control circuitry, which, in operation, controls the uplink transmission in the at least some time of the transmission opportunity, based on the control signal.

11. A communication method, comprising:
generating, by an access point, a control signal for allocating, for an uplink transmission performed by a plurality of terminals, at least some time of an obtained transmission opportunity; and
transmitting, by the access point, the control signal.

12. A communication method, comprising:
receiving, by a terminal, a control signal for allocating, for an uplink transmission performed by a plurality of terminals, at least some time of a transmission opportunity obtained by an access point; and
controlling, by the terminal, the uplink transmission in the at least some time of the transmission opportunity, based on the control signal.
